# EUROPEAN PATENT SPECIFICATION

(11) **EP 3 151 652 B1**
(45) Date of publication and mention of the grant of the patent: **15.08.2018**
(21) Application number: 15732970.7
(22) Date of filing: 02.06.2015
(51) Int. Cl.: A01F 15/02, A01F 15/04, B30B 9/30

(54) **PRESSING ARRANGEMENT AND METHOD FOR CREATING A POLYGONAL BALE**
PRESSANORDNUNG UND VERFAHREN ZUR ERZEUGUNG EINES POLYGONALEN BALLENS
DISPOSITIF DE PRESSAGE ET PROCÉDÉ DE CRÉATION D'UNE BALLE POLYGONALE

(30) Priority: 03.06.2014 NL 2012935; 09.07.2014 NL 2013155
(43) Date of publication of application: 12.04.2017
(73) Proprietor: Forage Innovations B.V., 3147 PB Maassluis (NL)
(72) Inventor: HAVERMANS, Cornelis Christianus Franciscus, 3147 PA Maassluis (NL); REIJERSEN VAN BUUREN, Willem Jacobus, 3147PB Maassluis (NL)
(74) Representative: AGCO Intellectual Property Department
(86) International application number: PCT/NL2015/050395
(87) International publication number: WO 2015/187012

(56) References cited:
- DE-U1- 9 107 404
- US-A- 3 541 949
- US-A- 6 161 368

## Description

### FIELD OF THE INVENTION

The invention refers to a compacting arrangement and to a compacting method for forming a polygonal bale from loose material, in particular from agricultural crop material.

### BACKGROUND OF THE INVENTION

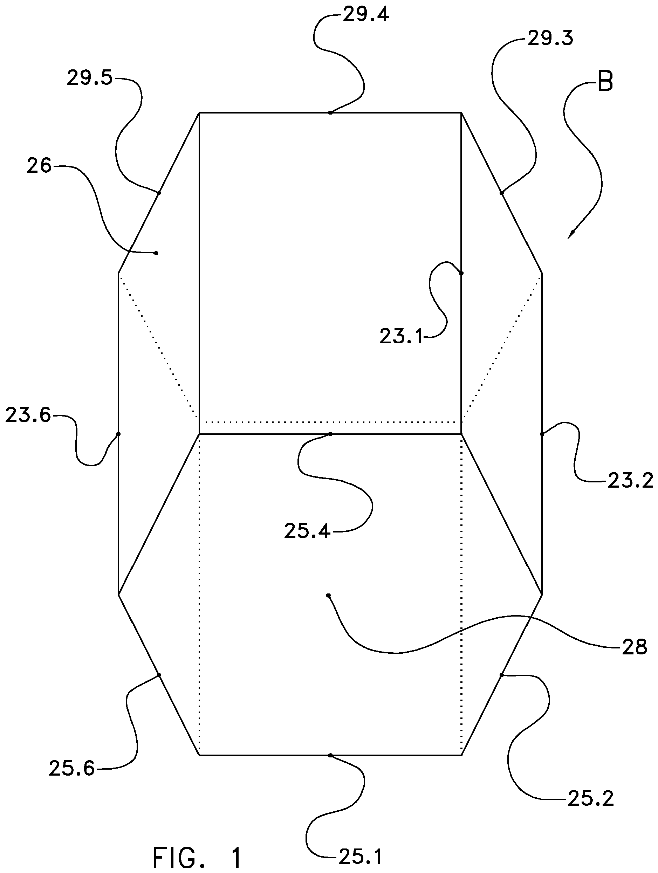

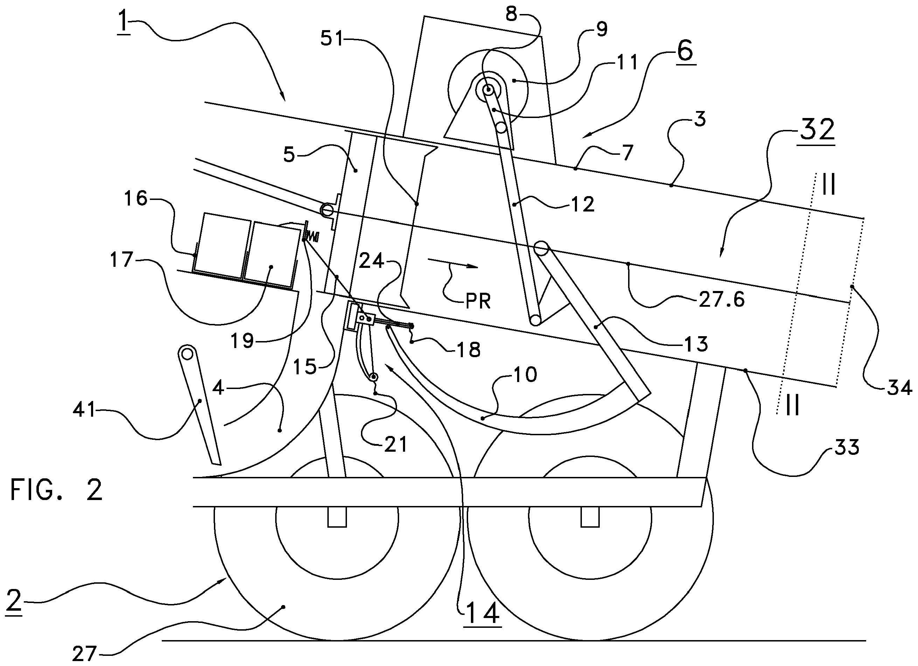

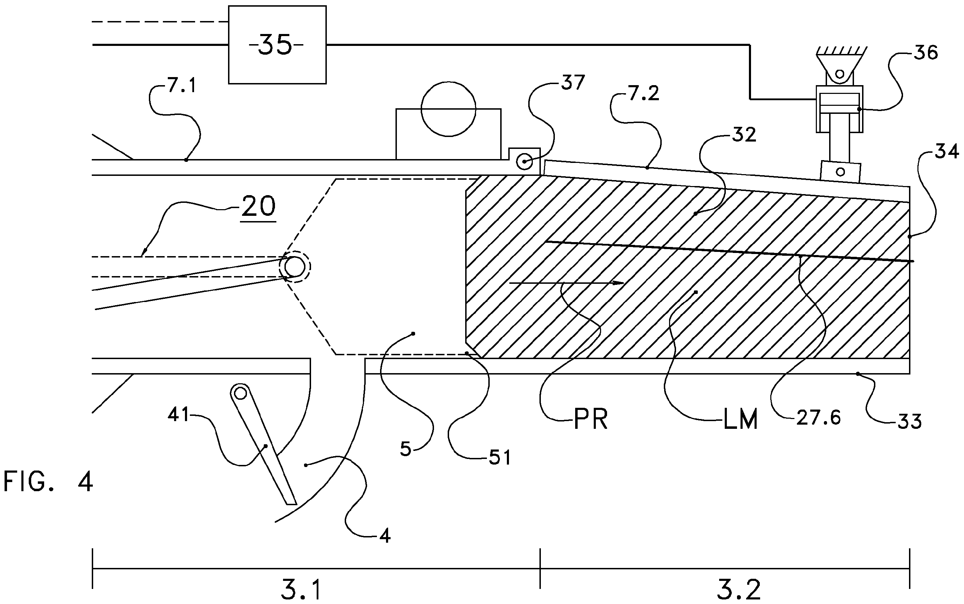

US 3,541,949 discloses a compaction apparatus for compacting material, e.g. trash, into barrels, drums, or bags. A material receiver 12 and a machinery compartment 14 are positioned in the forward and rearward end, resp., of a housing 10, cf. Fig. 1 and Fig. 2. The material to be compressed is inserted through an inlet with an inclining wall 34 into the material receiver 12. The front wall 40 of the housing 10 and further walls together define a polygonal opening O at the outlet end of the material receiver 12. A compaction blade 42 with a hollow polygonal box oscillates in the material receiver 12, cf. Fig. 4 to Fig. 6. The material is compressed and is pressed out of the material receiver 12 through a volume-reducing snout 94 mounted downstream of the polygonal opening O. A rear or entry portion 96 is connected with the polygonal opening O and has a constant polygonal cross-section. A tapering transition portion 100 connects the polygonal rear or entry portion 96 with a forward or exit portion 98 with a circular cross section. A material receptacle, e.g. a rigid drum or a bag, are placed over the major portion of the snout 94. The receptacle is filled with compressed material and is removed.

US 6,161,368 discloses a baler for forming rectangular bales. Fig. 1 and Fig. 2 show a conventional baler, Fig. 3 and Fig. 4 two embodiment of the claimed invention. The power-take off shaft of a pulling tractor drives a universal joint shaft 6 of the baler. A main drive 7 with a fly wheel 8 drives a pressing piston 13. A forward drive shaft 9 of the main drive 7 is connected with the universal joint shaft 6. A cross shaft 10 carries operating cranks. These cranks 11 drive the piston 13 by means of two connecting rods 14.

DE 9107404 U1 discloses a compacting device for pressing recycling material by means of an auger ("Ballen-Schneckenverdichter"). The material is tipped into a hutch ("Mulde") which has an upper aperture for filling in material ("schachtformige Einfüllöffnung 4"), cf. Fig. 1. A compacting auger with a helical vane rotates around a horizontal axis and presses material in a horizontal direction into an octagonal connecting piece ("achteckiger Austrittsstutzen 5") operating as an outlet of the hutch. At least two guiding elements guiding the material taper in a pressing direction away from the outlet 5. The auger and the tapered shape of the pressing channel press together the material to form a bale. The front part of the helical vane of the auger comprises a half disc ("halbkreisformige Scheibe 7") without flank lead ("Steigung"). The octagonal connecting piece 5 has apertures ("Durchbrüche") through which a needle 11 is shifted, cf. Fig. 2. This needle 11 grasps the yarn string 13.

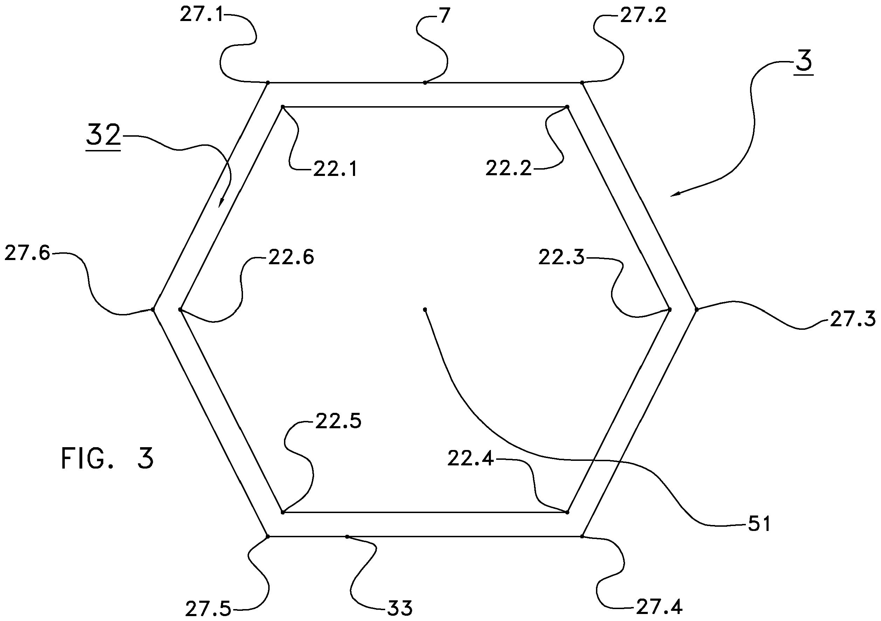

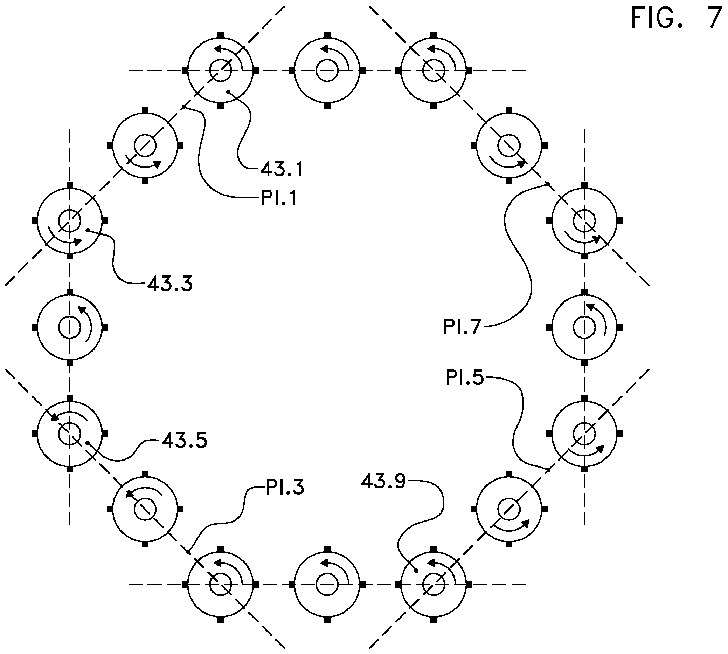

In DE 3423670 A1 an arrangement for pressing crop material ("Erntegut") at a collecting point ("Sammelstelle 3") is described. Several cylindrical bales created from crop material have been transported to this collecting arrangement 3. The collecting arrangement 3 comprises a sequence of wall parts ("Reihe von Wandungen 1") which can be pivoted and which together form a band or clamping device ("Band oder Klemmittel 2") which nearly surrounds the collecting arrangement 3. Every bale 7 stands on one front side and the vertically arranged bales are shifted together, cf. the top view of Fig. 1. Every wall part 1 comprises in one embodiment five horizontal metal strips ("Blechstreifen") which are arranged one above the other, i.e. along the vertical middle axis of the bale, cf. Fig. 7. A vertical articulation ("Scharnier 10") connects two adjacent wall parts 1. The band or clamping device surrounds the ensemble of vertical bales 7 with the exception of a gap between the two ends 4, 5 with the gap length ("Abstand 6"), cf. the top view of Fig. 1 and the side view of Fig. 2. The two end pieces 13, 14 at the ends 4, 5 each comprise a vertical beam ("Hohlbalken 15"). For pressing together the bales 7, the distance between these vertical beams 15 at the two ends 4, 5 is reduced by means of a rope guided around two rollers, cf. Fig. 3. Two chains 46 keep the band in the pressing mode after the distance has been reduced, cf. Fig. 7. After having pressed the bales 7 these bales 7 together have the shape of an object with six parallel vertical edges, cf. Fig. 8.

### SUMMARY OF THE INVENTION

A problem solved by the invention is to provide a compacting arrangement with the features of the preamble of claim 1 and a compacting method with the features of the preamble of claim 25 wherein several objects comprising compressed loose material can subsequently be formed and ejected by the compacting arrangement such that these objects can later be separated from each other outside of the compacting arrangement and can stably be stapled on each other and wherein every object can be removed from such a staple without damaging it even if the object has a considerable weight.

This problem is solved by a compacting arrangement with the features of claim 1 and by a compacting method with the features of claim 25. Preferred embodiments are specified in the depending claims.

The compacting arrangement according to the invention comprises
- a pressing chamber,
- an inlet,
- a compacting means,
- a form fixing means, and
- an outlet.

The inlet guides into the pressing chamber.

The pressing chamber is surrounded by a pressing chamber casing. The pressing chamber casing comprises at least one polygonal casing segment. The or every polygonal casing segment extends along a respective middle axis. The or every cross-sectional face of the or every polygonal casing segment, i.e. the intersection of the polygonal casing segment with a plane perpendicular to the middle axis, has a shape of a polygon with n corners and n edges between these n corners. The number n is equal to or greater than 5, i.e. greater than 4. Therefore the polygonal casing segment has n edges.

The compaction arrangement operates as follows:
- Loose material to be compressed is guided through the inlet into the pressing chamber.
- The compacting means compresses in the pressing chamber the loose material.
- A bale is created from the loose material in the polygonal casing segment. This bale comprises a circumferential surface with n edges with n >= 5, i.e. in a polygonal bale.
- The form fixing means provides in the pressing chamber a form fixing unit.
- The form fixing unit is placed around the compressed loose material while the loose material is in the interior of the or of one polygonal casing segment.
- By placing the forming fixing unit around the bale, the polygonal bale is wrapped into the form fixing unit.
- The created and wrapped bale is ejected through the outlet out of the pressing chamber.

### ADVANTAGES

According to the invention several objects in the form of wrapped polygonal bales can be formed in the compacting arrangement. Every bale extends along a middle axis and has a polygonal cross-sectional face with n edges wherein n is equal to or larger than 5. The cross-sectional face is perpendicular to the bale's middle axis. In particular the two parallel front faces of the created bale have the shape of a polygon with n corners and n edges. As long as the bale is in the pressing chamber, the bale's middle axis is equal to or parallel to the middle axis of the polygonal casing segment.

This bale with n edges parallel to the middle axis has the following advantages over a round-cylindrical bale:
- The risk is reduced that the bale rolls away after being ejected and if the bale is placed with the middle axis parallel to the ground in a downhill field. Thanks to the invention it is not necessary to tilt that bale in a vertical position wherein the bale's middle axis is perpendicular to the ground and the bale stands on one front side. Thanks to the invention a tilting unit is therefore saved.
- It is possible to stack several of such bales in a stable fashion and without a special staple supporting means. At least two such bales can be stacked one above the other.
- A stack with several polygonal bales requires less space than a stack with cylindrical bales with the same amount of material, i.e. the bale either has a smaller length or a smaller maximal diameter than a cylindrical bale with the same amount.

The polygonal bale with n edges parallel to its middle axis where n > 4 has the following advantages over a cuboid bale, i.e. a bale with n parallel edges where n = 4:
- The bale has n edges with n >= 5 such that in every edge two plane surfaces of the bale's circumferential surface meet. The inner angle between these two plane surfaces can be made greater than 90 degrees. The edges are therefore less pointed (less arcuate) than an edge with an angle of 90 degrees. The bale is more stable. The risk that loose material is torn off the bale is reduced. When wrapping or transporting the bale, less material is pulled of the bale and forms debris.
- To wrap the polygonal bale into a wrapping film requires less overlaps between two film layers and less tensioning force during the wrapping procedure.

Thanks to the invention such a bale is automatically created in the pressing chamber with the polygonal casing segment. It is not necessary to change the shape of a bale after having created it in the pressing chamber. In particular it is not necessary to bind together several smaller bales.

The polygonal casing segment with the n wall edges molds the shape of the bale with the n bale edges. It is possible to adapt the number n and the geometry of the polygonal casing segment to given requirements and constrains.

According to the invention a form fixing unit is placed around the bale in the polygonal casing segment. The bale is wrapped into this form fixing unit before the bale is ejected through the outlet out of the pressing chamber. Thanks to the form fixing unit the bale does not fall apart after being ejected and the polygonal shape of the bale with n edges parallel to the middle axis is kept after the bale has been ejected out of the pressing chamber. The form fixing unit around the ejected bale keeps and fixes the polygonal shape of the bale outside of the pressing chamber against the expanding force of the compressed material.

### PREFERED EMBODIMENTS

In one embodiment the or at least one polygonal casing segment tapers towards the outlet. This means: The area of the cross-sectional face of the polygonal casing segment decreases in a direction towards the outlet. The n edges of this polygonal casing segment are not parallel to each other. The n edges of the created bale, however, are preferably parallel to each other.

Thanks to the tapering polygonal casing segment and the decreasing cross-sectional area the compacting arrangement creates a polygonal bale wherein the loose material is further pressed together while being moved through the polygonal casing segment and thereby pressed towards the outlet. The same amount of compressed loose material is used for creating a higher compressed and therefore smaller polygonal bale.

In one embodiment the polygonal casing segment comprises a pivotal wall part. A wall part positioning means can pivot the pivotal wall part towards the middle axis of the polygonal casing segment against the expanding force of the loose material in the polygonal casing segment. This movement decreases the cross-sectional area of the polygonal casing segment against the expanding pressure of compressed loose material. Thanks to the wall part positioning means the cross-sectional area can automatically be changed during operation in a controlled manner.

In one implementation the wall part positioning means is single-acting and the compressed loose material can pivot the wall part away from the middle axis, thereby reducing the applied pressure. In an alternative implementation the wall part positioning means comprises a double-acting actuator which can pivot the pivotal wall part in both directions.

In one implementation the pivotal wall part extends in one plane. In an alternative implementation one edge of the polygonal casing segment runs through the pivotal wall part. Thereby the pivotal wall part comprises two wall elements which are connected with each other in this edge and with an angle below 180 degrees, preferably above 90 degrees. The edge between these wall elements belongs to the edge running through the pivotal wall part. This embodiment allows amending the pressure applied onto the loose material adjacent to an edge of the formed bale.

According to one embodiment the pressing chamber casing comprises the or every polygonal casing segment and at least one further casing segment. The compacting means compresses loose material in the or in one further casing segment and shifts the compressed loose material from the further casing segment into the polygonal casing segment which is positioned adjacent to the outlet. In one implementation a piston oscillates in the further casing segment and compresses loose material and shifts the compressed loose material into the pivotal casing segment. In a further implementation pressing rollers or augers compress loose material in the further casing segment.

In every implementation the polygonal bale is shaped and mold in the polygonal casing segment. This embodiment with the further casing segment makes it possible that at least one part of the compacting means needs not to be adapted to the polygonal shape of the polygonal casing segment. It is possible to use a compacting means with a piston head which has a rectangular or circular or elliptic cross-sectional face or a classical drum-shaped further casing segment with pressing rollers. It is not necessary to provide a polygonal pressing piston.

In one implementation the polygonal casing segment and the further casing segment extend along the same middle axis or along two parallel middle axes. The pressing chamber has the form of a pressing channel. In a further embodiment the two middle axes of the polygonal casing segment and of the further casing segment form an angle, e.g. a right angle.

In one embodiment the further casing segment is drum-shaped, e.g. like a drum-shaped pressing chamber of a well-known round baler. A part of the compacting means, e.g. several pressing rollers and/or at least one pressing belt, conveys the loose material along the circumferential wall of the drum-shaped further casing segment. The compressed loose material is moved out of the drum-shaped further casing segment and into the polygonal casing segment.

In an alternative embodiment the inlet guides into the or into one polygonal casing segment. In one implementation the entire pressing chamber has the polygonal shape. This implementation saves a transition segment between the further, preferably non-polygonal casing segment and the polygonal casing segment.

In one embodiment the bale is formed by a piston which oscillates in the interior of the pressing chamber. A drive causes the oscillating piston movement. The piston presses the loose material away from the inlet and towards the outlet.

In one implementation the piston oscillates in the interior of a further casing segment. The shape of the piston is adapted to the cross-sectional shape of the further casing segment. This implementation allows using a cuboid or cylindrical piston.

In a further implementation the piston oscillates in the interior of the polygonal casing segment. A pressing surface of the piston points to the loose material in the polygonal casing segment. The shape of this pressing surface is adapted to the cross-sectional shape of the polygonal casing segment. Preferably the pressing surface has n edges wherein n is at least 5.

In one implementation the entire piston oscillates in the interior of the polygonal casing segment. Only a plunger for the piston can partially be positioned outside of the polygonal casing segment. In a further implementation the piston is moved into the and out of the polygonal casing segment during one piston oscillation. The oscillating piston stuffs loose material from a further casing segment into the polygonal casing segment. Only the pressing surface pointing to the polygonal casing segment and engaging into the polygonal casing segment needs to be adapted to the cross-sectional shape of the polygonal casing segment.

In a further embodiment at least one auger engages into the interior of the or of one polygonal casing segment. The auger rotates around an axis parallel or angular to the middle axis of this polygonal casing segment and conveys and presses loose material in the polygonal casing segment. This embodiment enables a continuous movement of the compacting means. In one implementation the auger has a conical shape and tapers seen in a direction along the middle axis and towards the outlet.

In a further embodiment the compacting means conveys the loose material along the circumferential wall of the or of one polygonal casing segment, e.g. by several pressing rollers or at least one pressing belt. The pressing rollers form the circumferential surface of the polygonal casing segment. By conveying the loose material and by simultaneously injecting further loose material into the polygonal casing segment, an increasing bale is formed under pressure from the loose material in the polygonal casing segment. The increasing bale is rotated around an axis parallel to the middle axis of the polygonal casing segment. Also in this embodiment the polygonal shape of the polygonal casing segment molds the shape of the bale created in the pressing chamber. In order to form the polygonal bale with n edges, some pressing members of the compacting means have a larger distance to the middle axis than other pressing members. This embodiment is therefore an amendment of a well-known round baler with pressing rollers. This embodiment can be implemented with a further casing segment but does not require a further casing segment.

In the embodiment with the pressing rollers or pressing belts the form fixing unit is preferably conveyed into the interior of the polygonal casing segment by clamping the form fixing unit between the rotated bale and some pressing rollers or at least one pressing belt. It is also possible that at least one pressing belt forms a part of the circumferential surface of the polygonal casing segment and is guided over several guiding rollers. Preferably at least one guiding roller has a smaller distance to the middle axis than a further guiding roller.

According to the invention a form fixing unit is provided in the pressing chamber and is placed around the loose material in the pressing chamber. In one embodiment the form fixing unit is provided in the polygonal casing segment and is placed around the loose material in the polygonal casing segment. This embodiment enables to keep the form fixing unit in the polygonal casing segment until the polygonal bale is formed.

In a further embodiment the form fixing unit is provided in the interior of a further casing segment belonging to the pressing chamber casing. This further casing part has not necessarily a polygonal cross-sectional shape but can also have a circular or rectangular shape. The form fixing unit is placed in the further casing segment around the loose material. The loose material in the form fixing unit is moved from the further casing segment into the polygonal casing segment. The form fixing unit molds the shape of the wrapped bale already formed in the further casing segment.

In one embodiment the form fixing unit is provided in a part of the pressing chamber which is empty when the form fixing unit is provided. This part can be the polygonal casing segment or a further casing segment. The form fixing unit is preferably kept in the interior of this part of the pressing chamber, e.g. at the interior of the pressing chamber casing. The form fixing unit can be a bag made of an impermeable material or can comprise rigid elements connected by several strands of twine. The compacting means shifts the loose material into the provided form fixing unit and thereby fills the form fixing unit. This embodiment saves the need to insert the form fixing unit in a space between the pressing chamber casing and the compacting means.

In a further embodiment the loose material is compressed in the pressing chamber and afterwards the form fixing unit is placed around the compressed loose material. This embodiment makes it possible that the form fixing unit is stabilized and guided by the interior of the pressing chamber casing while wrapping the compressed material.

According to the invention a form fixing unit is provided in the pressing chamber. The compressed loose material is wrapped into this form fixing unit. The form fixing unit keeps the shape of the polygonal bale after the bale is ejected out of the pressing chamber. Different embodiments of the form fixing unit are possible.

In one embodiment the form fixing unit is made of a flexible impermeable material, e.g. of a plastic film, and is sealed after the form fixing unit is placed around the loose material. The sealed form fixing unit keeps the polygonal bale shape.

The fixation of the bale form is preferably further improved if low pressure is at least temporarily generated in the interior of the polygonal casing segment. This low pressure is smaller than the atmospheric pressure on ground, i.e. in the environment of the compacting arrangement. The low pressure removes gaps inside of the loose material in the pressing chamber and/or between the form fixing unit and the loose material in the form fixing unit and/or between the form fixing unit and the interior of the pressing chamber casing. Preferably the embodiment with the low pressure is combined with the embodiment of a form fixing unit made of flexible impermeable material and/or of sealing the form fixing unit. The impermeable material keeps the pressure difference.

In a further embodiment the form fixing unit comprises several rigid elements which fix the polygonal shape of the created bale. Preferably the rigid elements are positioned on the bale's circumferential surface in an orientation perpendicular to the bale's middle axis. The embodiment with the rigid elements can be combined with the embodiment of with a flexible impermeable material. The impermeable wrapping material prevents the bale from falling apart after being ejected out of the pressing chamber. The rigid elements keep the polygonal shape of the bale. The rigid elements are preferably positioned around the impermeable material.

In one embodiment the form fixing unit comprises n parallel longitudinal elements, e.g. n rods or n ropes. These n parallel longitudinal elements are connected with each other by rigid connecting elements, e.g. crossbars, wherein every connecting element hingedly connects two adjacent longitudinal elements. After the form fixing unit is placed around the loose material and a polygonal bale is created, the n longitudinal elements are positioned perpendicular to the bale's middle axis and extend parallel to and adjacent to the n edges. The rigid connecting elements prevent the compressed loose material in the form fixing unit to take the form of a round cylinder.

In one implementation the embodiment with the impermeable material is combined with an embodiment with several strands of twine. According to this embodiment the form fixing means comprises
- a reservoir with several strands of twine,
- a guiding member, and
- a knotting arrangement.

The guiding member guides several twine strands from the reservoir around the polygonal bale which is already wrapped in the impermeable material. Preferably the wrap with the impermeable material is sealed. The knotting arrangement knots together several pairs each comprising at least two strands of twine.

In one application the bale is not only wrapped into the form fixing unit but is additionally wrapped into a further wrap, e.g. into at least one plastic film. According to the invention the bale is wrapped in the pressing chamber of the compacting arrangement into the form fixing unit. The further wrap is placed outside of the pressing chamber around the polygonal bale in the form fixing unit, e.g. by a wrapper connected with the compacting arrangement. Preferably the further wrap provides an impermeable wrap for the polygonal bale which is in particular important for silage applications. It is not necessary to provide the impermeable further wrap in the interior of the compacting arrangement.

In one application the compacting arrangement is implemented on board of a vehicle, e.g. on an agricultural vehicle which can be moved over an agricultural field. The vehicle can be moved over public streets and over other ways to the place of operation, e.g. a field. The compacting arrangement processes crop material or waste, e.g. cartridges or plastic garbage.

In one embodiment the vehicle is moved while the compacting arrangement compresses loose material. Preferably the vehicle picks up loose material from the ground and injects the picked-up material through the inlet into the pressing chamber. In a further embodiment the vehicle remains on one place while forming a bale. The vehicle is only moved after one bale is ejected and before the creation of the next bale is started. Of course the vehicle can be used for producing several bales and the same place. It is also possible that the vehicle is moved from a place where the loose material is injected to a further place where the bale is to be deposited. The time for moving the vehicle can be used for forming the bale.

In this further embodiment the loose material is not picked-up but is injected by a suitable conveyer into the pressing chamber, e.g. in a horizontal direction, or is dropped from above into the pressing chamber.

In a further application the compacting arrangement belongs to a stationary plant. The stationary plant compresses garbage or recycling material, e.g. cartridges or plastic elements.

These and other aspects of the invention and of the preferred embodiment will be even more apparent from the detailed embodiment as described below and will be elucidated in detail there.

### BRIEF DESCRIPTION OF THE DRAWINGS

Fig. 1 shows a polygonal bale in a perspective view;
Fig. 2 shows a channel baling press;
Fig. 3 shows a cross section through the pressing channel of Fig. 2;
Fig. 4 shows a further channel baling press with a pivotal top wall of the pressing channel;

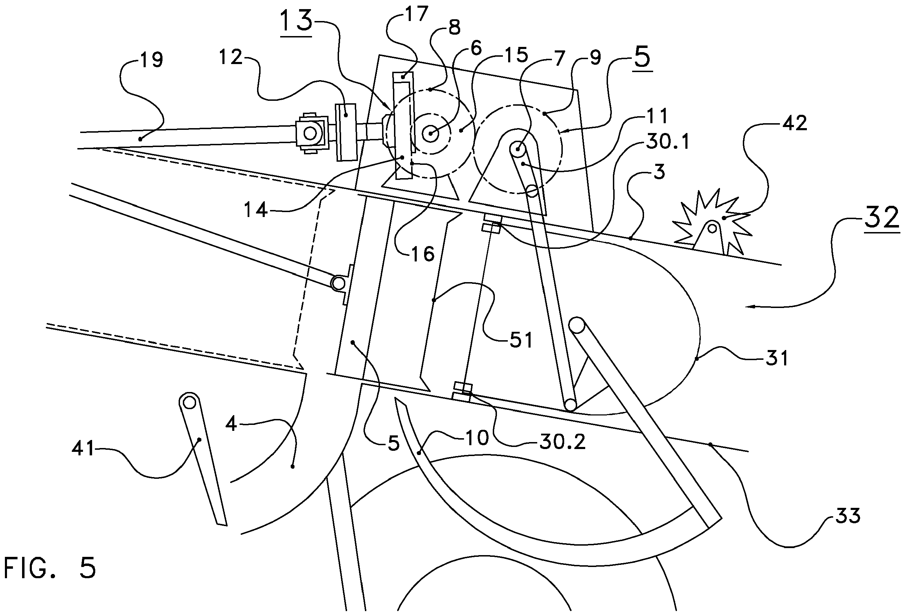

Fig. 5 shows a channel baling press holding a bag in the pressing channel;

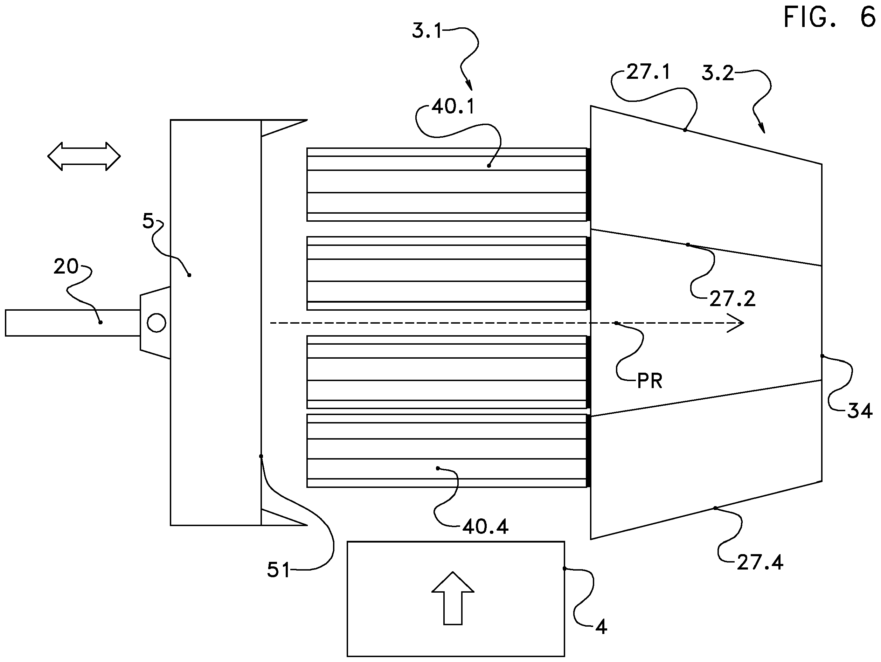

Fig. 6 shows a baler with a drum-shaped pressing chamber and a polygonal casing segment;
Fig. 7 shows a baler with twelve pressing rollers forming the polygonal casing segment.

### DETAILED DESCRIPTION OF EMBODIMENT

In all embodiments described in the following the invention is used in a bale forming arrangement (baler) for agricultural purposes. The baler produces a bale from loose agricultural material, e.g. from hay, straw or silage. The baler belongs to an agricultural vehicle and is mechanically connected with a tractor or further propelled vehicle via a towing unit and is pulled by the tractor in a traveling direction. A power take-off (PTO) shaft of the tractor drives a drive shaft and via a gearbox several parts of the baler, in particular the compacting means of the baler.

In one implementation the baler comprises a frame and a pressing chamber formed by one chamber casing part or several casing parts. For creating a bale the baler is operated in a bale creating mode. In this mode the chamber casing part or the several chamber casing parts together form a pressing chamber casing which surrounds and thereby defines the pressing chamber. The bale is created under pressure in this pressing chamber.

The baler further comprises
- a pick-up means for picking up loose crop material from the ground,
- a feeding unit for feeding material from the pick-up unit towards the and into the pressing chamber through a feeding channel wherein the feeding unit comprises a conveying rotor with several rigid tines,
- optionally a cutting unit with several parallel knives wherein the conveying rotor presses material through gaps between the knives, and
- optionally a pre-pressing unit for pre-pressing the material in the feeding channel, e.g. by means of rotating stuffing tines.

In a further implementation the agricultural material is dropped from above into the pressing chamber or is conveyed into in a horizontal or sloping direction into the pressing chamber. In this further implementation the baler is preferably not moved over ground when forming a bale.

Different embodiments of the baler are possible. These embodiments distinguish in the operational mode of the pressing chamber and the compacting means or in the way how a bale is wrapped in the pressing chamber. In all embodiments of a baler according to the invention, a compacting means creates in the pressing chamber a bale with two parallel front faces and a polygonal cross-sectional face. This bale extends along a longitudinal axis perpendicular to the front faces. As long as the bale is in the pressing chamber, this bale's longitudinal axis is parallel to the middle axis of the pressing chamber. The two parallel front faces of the created bale are perpendicular to the bale's longitudinal axis. The cross-sectional face is the intersection between the bale and a plane perpendicular to the bale's longitudinal axis. The front faces and all cross-sectional faces have the shape of a polygon with n corners where n is greater or equal 5. Therefore the bale has n edges. These n edges are parallel to the bale's longitudinal axis.

Fig. 1 shows a polygonal bale B which is created by a compacting arrangement according to all described embodiments of the invention. Fig. 1 shows this bale B in a perspective view.

The created bale B has two front faces 28 (in the foreground) and 26 (in the background). Every front face 26, 28 has the form of a polygon with six corners and six edges between this corners. Fig. 1 shows the six edges 25.1, 25.2, ... of the front face 28 (in the foreground) and the six edges 29.1, 29.2, ... of the rear front face 26 (in the background).

A circumferential surface of the bale extends between these two front faces 26, 28. This circumferential surface has six parallel edges 23.1, 23.2, ... The bale can also comprise a further number of edges, e.g. n= 8 edges.

The shape of the bale B is formed under pressure and molded by the shape of a polygonal casing segment of the pressing chamber. Preferably the pressing chamber walls of the polygonal casing segment are adapted such that the created bale has smooth transition areas around the n parallel edges. This eases the process of wrapping the bale and further reduces the risk that the bale loses its shape after being ejected out of the pressing chamber. To achieve a smooth transition area, the cross-sectional face of the polygonal casing segment and therefore that of the created bale is a polygon with n inner angles where all inner angles are greater than 90 degrees. The sum of the inner angle sizes of this polygon equals (n-2) x 180 degrees. In the example of Fig. 1 every one of the six inner angles has a size of 120 degrees.

In one embodiment all inner angles have the same size, i.e. every inner angle has a size of (n-2)/n * 180 degrees. The edges of this polygon have not necessarily all the same lengths but some edges can be longer than other edges. The ejected bale lies on the ground even with its longitudinal axis parallel to the ground and achieves a stable position and cannot roll away, in particular if the bale has in one direction perpendicular to the longitudinal axis a larger dimension than in another direction perpendicular to the longitudinal axis.

Preferably at least two edges of the polygon with n corners are parallel to each other. The effect: The circumferential outer surface of the bale has at least two parallel rectangular planes which are parallel to each other. This embodiment helps to subsequently create several bales which can better be stapled. Afterwards it is possible to build up a staple with several bales where every bale is created according to the invention.

In one implementation this polygonal bale is formed in a channel baling press. Fig. 2 shows schematically a part of this channel baling press 1 in a side view. The channel baling press 1 presses a string of crop material in a pressing channel 32. This crop material is conveyed into the pressing channel 32 through a feeding channel 4. Several stuffing tines 41 engage from above into the feeding channel 4 and pre-press the crop material in the feeding channel 4 and load the pre-pressed crop material into the pressing channel 32. A pressing piston 5 oscillates in the pressing channel 32. The pressing piston 5 has a pressing surface 51 facing to the crop material. The pressing piston 5 is guided by a piston rod 20 and presses the crop material in the pressing direction PR towards the outlet 34 (in Fig. 2 from left to right).

The pressing channel 32 is surrounded by a polygonal pressing channel casing 3. In the embodiment of Fig. 2 the polygonal casing 3 extends over the entire length of the pressing channel 32. The polygonal casing 3 of the pressing channel 32 has six edges, among them the edge 27.6 pointing to the observer.

A knotting arrangement 6 is mounted on the top wall 7 of the pressing channel 32. A knotter shaft 8 drives a knotter device 9. A crank rod 11, a first lever arm 12, and a second lever arm 13 connect the knotter shaft 8 with a knotter needle 10 arranged below the feeding channel 32. Two supply reels 17 with twine are stored in a reservoir 16. A brake 19 decelerates a strand 15 of twine pulled from a roll 17. The strand 15 of twine is guided by a twine guiding device 14. A spring 21 tensions the strand 15 of twine together with the brake 19. The element 24 keeps the front segment 18 of the strand 15 of twine.

Fig. 3 shows a cross-section through the pressing channel 32 of Fig. 2. The drawing plane of Fig. 3 is in the plane II - II of Fig. 2 (near the channel outlet 34).

Fig. 3 shows schematically a cross section through the casing 3 of the pressing channel 32 having the form of a polygon with six corners and six edges between these six corners. The pressing direction PR points to the observer. Fig. 3 shows the six corners 27.1, 27.2, ... of the cross-sectional shape of the casing 3 having the form of a polygon. The head of the pressing piston 5 and therefore the pressing surface 51 also has a polygonal shape with six corners. Fig. 3 shows the six edges 22.1, 22.2, ... of the piston 5 being parallel to the six edges 27.1, 27.2, ... of the casing 3 and perpendicular to the drawing plane of Fig. 3. The shape of the piston head 5 is adapted to the cross-sectional shape of the casing 3. In Fig. 3 the distance between the pressing piston 5 and the casing 3 is shown in an exaggerated manner.

In the example of Fig. 2 and Fig. 3 the top channel wall 7 is parallel to the bottom wall 33 of the casing 3 of the pressing channel 32.

In one embodiment the pressing chamber is arranged as a polygonal pressing channel 32 with a channel casing 3, a crop material inlet at the end of the feeding channel 4 and a bale outlet 34, cf. Fig. 2 and Fig. 3. The channel walls of the casing 3 extend along a middle axis. In general this middle axis is parallel to the travelling direction of the baler (in Fig. 2 from right to left) and forms the longitudinal axis of the pressing channel. In the example of Fig. 2 this middle axis is behind the edge 27.6. Every channel wall can be integrally formed or can be formed by several rigid wall parts wherein at least one wall part is angularly connected with a further wall part and/or can be pivoted with respect to a further wall part.

The pressing channel casing 3 - or at least one part of the pressing chamber casing - can taper seen in a direction parallel to the middle axis from the inlet to the outlet 34. In addition the cross-sectional shape of the casing 3 and thereby the pressing channel 32 can in one embodiment be reduced and enlarged by a positioning means, e. g. by a hydraulic cylinder pressing laterally against a pivotal wall part and pivoting this wall part. In one embodiment a control unit controls the force or pressure which the positioning means applies onto the pivotal wall part. This is described below with reference to Fig. 4.

The feeding means - a conveying rotor and/or a pre-pressing means comprising several stuffing tines 41 cooperating with an oscillating piston 5 - presses the crop material through the inlet into the pressing channel 32. The compacting means 5 presses the material through the pressing channel 32 along the middle axis towards the outlet 34. From one side the compacting means 5 applies a compacting force onto the loose crop material.

In one embodiment this material is pressed against further material in the pressing channel 32. If the casing segment adjacent to the outlet 34 tapers, crop material in the channel 32 is further pressed together. The baler creates an endless string of pressed material. This created string has n parallel edges being parallel to the middle axis where n > 5. Several polygonal bales are separated from this endless string.

In an alternative embodiment the outlet 34 of the pressing channel 32 is provided with a door (not shown) having one pivotal wing or two pivotal wings. This door can be pivoted between a closed and an opened position. When being in the closed position, the door and the pivotal casing segment together form a pot into which crop material in pressed. After opening the door, the bale B is shifted and by this is ejected out of the pressing channel.

In both embodiments the pressing channel extends along a middle axis and in a pressing direction PR. This middle axis is parallel to the traveling direction into which the baler is pulled by the tractor. The material is pressed parallel to this middle axis into the pressing direction PR.

In one embodiment the pressing channel casing has at least one polygonal casing segment and at least one cuboid or cylindrical casing segment. The cuboid or cylindrical segment is adjacent to the inlet and therefore forms an inlet segment. The polygonal casing segment is positioned downstream from the cuboid or cylindrical segment and adjacent to the outlet 34 and therefore forms an outlet segment. A cross-sectional face of the polygonal casing segment has the shape of a polygon with n corners where n is equal to 5 or is greater than 5, e. g. equals 6 or 8. This cross-sectional face is the intersection of the polygonal casing segment with a plane perpendicular to the middle axis. Therefore the polygonal casing segment has n edges. The outlet 34 also has the shape of a polygon with n corners. Crop material is first pressed into the and through the inlet segment and afterwards through the outlet segment.

In one embodiment the polygonal casing segment can taper seen in a direction towards the outlet 34 such that the area of the cross-sectional face decreases seen in this direction towards the outlet 34. In one implementation the walls of the tapering pivotal casing segment are rigidly connected with each other.

In a further implementation at least one wall part of the polygonal casing segment or one wall of the cuboid or cylindrical segment is pivotally mounted such that this wall part can rotate around an axis perpendicular to the pressing direction PR and perpendicular to the middle axis. A wall part positioning means, e.g. at least one hydraulic cylinder, is connected with the frame and with the wall part and is adapted for pivoting the wall part. Therefore the amount of tapering can be adapted and changed during operation in a controlled manner. The area of a cross-sectional face can automatically be amended during operation. If the polygonal casing segment does not taper, the n edges are parallel to the middle axis.

Fig. 4 shows schematically an example in which the casing 3 of the pressing channel 32 is divided into a front casing segment 3.1 serving as the further casing segment and a rear casing segment 3.2 serving as the polygonal casing segment. The pressing piston 5 oscillates in the interior of the front casing segment 3.1. The front casing segment 3.1 and the piston 5 have rectangular cross sections. The oscillating piston 5 does not reach the rear casing segment 3.2.

In this embodiment only the rear casing segment 3.2 has a polygonal cross-sectional shape. Fig. 4 shows an edge 27.6 of the rear casing segment 3.2. Fig. 4 further shows the loose material LM between the pressing surface 51 of the piston 5 and the outlet 34.

The top wall 7 of the pressing channel 32 is divided into a front wall segment 7.1 and a rear wall segment 7.2. The rear wall segment 7.2 belongs to the rear casing segment 3.2 and is pivotally connected with the stationary front wall segment 7.1 in a pivoting axle 37 (perpendicular to the pressing direction PR and to the drawing plane of Fig. 4). An actuator 36 can pivot the top wall segment 7.2 towards the middle axis PR and thereby against the expanding pressure of the crop material. The actuator 36 can be a single-acting or a double-acting actuator. A control unit 35 triggers the movements of the actuator 36.

The oscillating pressing piston 5 presses crop material LM in the pressing direction PR through the pressing channel 32. Fig. 4 further shows the piston rod 20 and the feeding channel 4 with a stuffing tine 41.

In the embodiment with the pressing channel 32 the baler continuously creates polygonal bales. It is not necessary to stop the baler during operation. A continuous string of pressed material is created in the pressing channel 32. The compacting means 5 or a specific ejecting means conveys the string with the pressed material in the pressing direction PR towards the outlet 34.

The specific ejecting means may comprise several so-called dogs mounted on a slide or another carriage (not shown) which reciprocates in the pressing channel 32 and parallel to the middle axis. The dogs on the carriage can be pivoted into an engaging position where the dogs engage from below the bale B and can be pivoted into a non-engaging position. The slide with the engaged dogs shifts the bale B out of the pressing channel 32. Preferably the slide can be moved in both directions - like a shuttle. The specific ejecting means can comprise a rotating star with tines or other protrusions rotating around a horizontal axis perpendicular to the conveying direction, i.e. perpendicular to the middle axis.

The knotting arrangement 6 wraps a part of the string into several strands 15 of twine or yarn and thereby creates bales from the string, cf. Fig. 2. The generated bale extends along the middle axis of the material string and has two front faces perpendicular to the middle axis and n edges parallel to this middle axis. As shown in Fig. 1. The twine strands belong to the form fixing unit for a polygonal bale B and can be combined with further wraps for the bale B, i.e. with further elements of a form fixing unit.

In an alternative embodiment the baler comprises several pressing and conveying units similar to a known round baler. The crop material is conveyed through an inlet into the pressing chamber. The pressing and conveying units convey the material along the circumferential wall of the pressing chamber such that the material rotates around a horizontal axis which is preferably perpendicular to the traveling direction. It is also possible that this horizontal axis is parallel to the travelling direction. This rotation axis is denoted as the middle axis of the pressing chamber. The material forms an increasing bale in the pressing chamber 32. Two embodiments are described below with reference to Fig. 6 and Fig. 7.

The maximal diameter of the pressing chamber 32 perpendicular to the middle axis may be greater than the dimension of the pressing chamber along the middle axis. Therefore this middle axis is not necessarily along the longitudinal, i.e. longest axis along the pressing chamber 32.

At least some of the pressing and conveying units comprise pressing rollers wherein each roller has a conveying surface which is in contact with the material and conveys material. In one embodiment all conveying units comprise pressing rollers such that a pressing chamber with fixed size is formed. The outer surfaces of these pressing rollers form the conveying surfaces being in direct contact with the crop material.

In an alternative embodiment some pressing and conveying units comprise endless pressing and conveying belts which convey and pull the material. Driven rollers and idler rollers guide these belts and effect a high tension of these belts and press the belts against the material in the pressing chamber. The growing bale formed in the chamber presses against the conveying belts such that an increasing pressing chamber, i.e. a chamber with variable size, is formed. Therefore a baler with a variable size chamber has two kinds of rollers: pressing rollers and rollers which press at least one endless belt against the material and guide this belt. These two kinds of rollers are denoted as "bale forming rollers". A baler with a fixed size chamber also may have at least one endless pressing bales pressing material in the pressing chamber.

In both embodiments all rotational axes of these rollers are parallel to the chamber's middle axis and therefore preferably perpendicular to the traveling direction. In both embodiments the pressing and conveying units are arranged such that the pressing chamber with the rollers has a cross-sectional face having the shape of a polygon with n corners where n >= 5. This cross-sectional face lies in a plane which is perpendicular to the middle axis and therefore perpendicular to the rotational axes of the rollers. The n corners of this polygon are defined by n rollers of the pressing and conveying units.

Fig. 7 shows an embodiment in which the polygonal bale is formed by means of twelve driven pressing rollers 43.1, ..., 43.12 forming the circumferential surface of the polygonal casing segment 3.2 with n = 6 edges. The middle axis PR and the rotating axes of the pressing rollers are perpendicular to the drawing plane of Fig. 7. Several ribs are mounted on the circumferential surface of every pressing roller 43.1, ..., 43.12. The pressing rollers 43.1, ..., 43.12 are positioned such that eight roller pairs are formed wherein every roller pair comprises three adjacent pressing rollers. The three rotating axes of the three rollers of one roller pair are in one plane which is parallel to the middle axis of the polygonal casing segment 3.2. Fig. 7 shows the eight planes Pl.1, ..., PI.8 of the eight roller pairs.

In one implementation the loose crop material is guided through an inlet between two adjacent pressing rollers 43.1, ..., 43.12 into the interior of the polygonal casing segment 3.2. In a further embodiment the loose material is injected into the polygonal casing segment 3.2 in a conveying direction which is perpendicular to the drawing plane of Fig. 7 and parallel to the middle axis PR.

In the embodiment with the fixed size chamber some pressing rollers have a greater distance from the middle axis than other pressing rollers. In a baler with variable size chamber some bale forming rollers have a greater distance to the middle axis than other bale forming rollers. Amongst other features this feature distinguished a baler with pressing and conveying units according to the invention from a well-known round baler.

As mentioned above the invention can be applied to amend a well-known round baler with pressing and conveying units in the pressing chamber. In one implementation of this embodiment the pressing chamber casing 3 is divided into a fixed casing part and a pivotally mounted casing part. The fixed casing part belongs to the front housing and the pivotally mounted casing part belongs to a tailgate. The tailgate can be rotated around a horizontal pivoting axis perpendicular to the traveling direction. When the baler is operated in a bale forming mode, the front housing and the tailgate are locked and therefore rigidly connected with each other to form a pressing chamber casing. After having finished the bale creation process the locking is released, the tailgate is rotated around the horizontal pivoting axis, and the bale B is ejected out of the opened pressing chamber 32. The embodiment of Fig. 7 can be used in such a baler.

In order to keep the polygonal shape of a bale B created in the pressing chamber, the bale is wrapped. The wrapping material may be a net made of a suitable material, e.g. of twine or plastic, or a twine or a sheet, e.g. a plastic foil. In the embodiment the bale is wrapped while being in the pressing chamber, i.e. before being ejected. This wrap fixes the polygonal cross-sectional face of the bale B after the bale has been ejected.

In one embodiment wrapping material is ejected into a space between the circumferential surface of the bale and the pressing chamber casing. Two rollers or two yaws of a duckbill-like assembly or a further suitable means grasp the wrapping material and pull the wrapping material from a reel. The wrapping material is injected through a nip into this space. The bale is rotated and grasps the wrapping material and further pulls it from the reel.

In one embodiment the step of injecting wrapping material into the space between pressing chamber casing and compacting means comprises the step that the bale is rotated by several rollers. The rotational axes of these rollers are all parallel and parallel to the middle axis of the rotating bale such that the bale rotates around its middle axis. In the case of a pressing channel this middle axis and therefore the rotating axes are parallel to the traveling direction. In the case of a baler similar to a round baler these axes are perpendicular or also parallel to the traveling direction. The same rollers which make the crop material LM rotating around the middle axis also make the baler rotating and inject wrapping material into the pressing chamber. In both embodiments the rollers for injecting the wrapping material are mounted into the pressing chamber casing 3. The rollers may be mounted into the polygonal casing segment 3.2.

In one embodiment the process of wrapping a bale B into a sheet is augmented by means of a low pressure generating means comprising a sucking unit. This sucking unit sucks air out of the pressing chamber 32 and through holes in the pressing chamber casing 3. Air is sucked out of the pressing chamber 32 when a sheet, e.g. a plastic foil, is in the interior of the pressing chamber 32. This procedure causes the sheet to be pressed against the pressing chamber casing 3 and against the rotating rollers which make the bale B rotating around its middle axis. This low pressure contributes to applying the sheet seamlessly against the pressure chamber casing 3 such that the sheet takes the shape of the pressing chamber casing 3.

In one embodiment further agricultural material is pressed through the inlet 4 into the pressing chamber 32 while the sheet in the pressing chamber 32 is pulled by the rotating bale B such that gaps and holes in the partially wrapped bale B are filled with crop material. This implementation is in particular performed if the rotating axes of the rollers are parallel to the traveling direction, i.e. parallel to the direction into which the agricultural material is fed into the pressing chamber having the form of a pressing channel 32.

In a further embodiment the loose crop material LM is pressed into a bag while being in the pressing chamber 32. Before crop material to be pressed is injected into the pressing chamber, an empty bag is inserted into the pressing chamber and is kept by a suitable holding means, e.g. by a clamp arrangement. In one implementation the bag is provided in the pivotal casing segment 3.2. In a further implementation the bag is provided in a further casing segment 3.1 positioned upstream from the pivotal casing segment 3.2.

It is possible that a blower blows air into this bag such that the bag is widened and is pressed from interior against the pressing chamber casing 3. It is further possible that a sucking unit sucks air out of the pressing chamber through holes in the pressing chamber casing 3. Both possible embodiments press the bag in the pressing chamber against the pressing chamber casing 3 such that no holes and gaps remain between the casing 3 and the bag. The bag takes the form of the interior side of the pressing chamber casing 3.

After providing the bag in the interior of the pressing chamber 32, loose agricultural material LM is pressed into the bag. Preferably the traveling direction of the baler is parallel to the middle axis of the pressing chamber 32 in which the bag is held.

Fig. 5 shows a channel baling press with such a bag 31. A drive shaft 19 drives the knotting arrangement 6 on top of the pressing channel 3. Fig. 5 further shows a star wheel 42 which measures the length of a bale B in the pressing channel 32. Two clamping elements 30.1, 30.2 hold the bag 31 in the interior of the pressing channel 32. The pressing piston 5 oscillates in the pressing channel 32 and presses loose crop material into the bag 31.

Fig. 6 shows a further embodiment of the invention. The baler of Fig. 6 compresses loose material in a drum-shaped pressing chamber 3.1 serving as the further chamber casing. The baler forms polygonal bales in a polygonal casing segment 3.2. The polygonal casing segment 3.2 tapers towards the outlet 34. The tapering is shown exaggerated in Fig. 6.

Fig. 6 shows the following parts (from left to right):
- a piston rod 20,
- a pressing piston 5 with a round piston head 51,
- four exemplary pressing rollers 40.1, ..., 40.4 surrounding the drum-shaped pressing chamber 3.1,
- an inlet 4 for crop material which guides loose material into the drum-shaped pressing chamber 3.1 in a direction perpendicular to the middle axis PR,
- the tapering polygonal casing segment 3.2 with the edges 27.1, 27.2, ...,
- the common middle axis PR of the drum-shaped pressing chamber 3.1 and the polygonal casing segment 3.2, and
- the outlet 34.

The baler of Fig. 6 operates as follows:
- Loose crop material is injected through the inlet 4 into the drum-shaped pressing chamber 3.1 serving as the further casing segment.
- The pressing rollers 40.1, 40.2, ... compress injected loose material in the drum-shaped pressing chamber 3.1.
- The pressing piston oscillates (shown in Fig. 6 by the double arrow). The oscillating pressing piston shifts compressed loose material out of the drum-shaped pressing chamber 3.1 into the polygonal casing segment 3.2.
- The polygonal casing segment 3.2 molds a polygonal bale B.
- The pressing piston 5 shifts the polygonal bale B out of the polygonal casing segment 3.2 through the outlet 34.

In one implementation the form fixing unit 31 is applied to the loose material LM being in the drum-shaped pressing chamber 3.1. Thereby the compressed loose material is wrapped. The pressing piston 5 shifts the wrap loose material into the polygonal casing segment 3.2 which molds the polygonal bale shape. In a further implementation the form fixing unit 31 is applied to the loose material LM being in the pivotal casing segment 3.2.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | channel baling press |
| 2 | wheel of channel baling press 1 |
| 3 | pressing chamber casing of the pressing channel 32, comprises the polygonal casing segment 3.2 |
| 3.1 | front casing segment of the casing 3 - in one embodiment the piston 5 oscillates in this front casing segment 3.1 |
| 3.2 | rear casing segment of the casing 3, has a polygonal cross-sectional shape |
| 4 | feeding channel, leads to the pressing channel 32 |
| 5 | polygonal or rectangular pressing piston, oscillates in the pressing channel 32 |
| 6 | knotting arrangement |
| 7 | top wall of the pressing channel casing 3 |
| 7.1 | stationary front part of the top wall 7 |
| 7.2 | pivotal rear part of the top wall 7 |
| 8 | knotter shaft, drives the knotter device 9 |
| 9 | knotter device |
| 10 | knotter needle |
| 11 | crank rod, driven by the knotter shaft 8 |
| 12 | first lever arm for the knotter needle 10 |
| 13 | second lever arm for the knotter needle 10 |
| 14 | twine guiding device |
| 15 | strand of twine, pulled from the reel 17 |
| 16 | reservoir for several supply reels of twine |
| 17 | reels with strands of twine, stored in the reservoir 16 |
| 18 | front segment of the strand 15 of twine |
| 19 | drive shaft for the knotting arrangement |
| 20 | piston rod moving the pressing piston 5 |
| 21 | spring for tensioning the strand 15 |
| 22.1, 22.2, ... | edges of the polygonal pressing piston 5 |
| 23.1, 23.2, ... | edges of the circumferential surface of the bale B |
| 24 | holding element for the front segment 18 of the strand of twine 15 |
| 26, 28 | front faces of the polygonal bale B |
| 25.1, 25.2, ... | edges of the front face 28 of the bale B |
| 27.1, 27.2, ... | edges of the circumferential surface of the pressing channel 32 |
| 29.1, 29.2, ... | edges of the front face 26 of the bale B |
| 30.1, 30.2 | clamps for holding the bag 31 in the pressing channel 32 |
| 31 | bag for loose crop material (LM) |
| 32 | pressing channel of the channel baling press 1, surrounded by the casing 3 |
| 33 | bottom wall of the pressing channel casing 3 |
| 34 | polygonal outlet of the pressing channel 32 |
| 35 | control unit for the actuator 36 |
| 36 | actuator for the pivotal top wall 7 |
| 37 | pivoting axle for the rear segment 7.2 of the top wall 7 |
| 40.1, ..., 40.4 | pressing rollers of the drum-shaped pressing chamber |
| 41 | stuffing tines |
| 42 | star wheel, measures the movement of a crop material string in the channel 32 |
| 43.1, 43.2, ... | pressing rollers of the polygonal pressing chamber |
| 51 | pressing surface of the polygonal pressing piston 5 |
| B | created polygonal bale |
| LM | loose crop material to be pressed in the pressing chamber 32 |
| PI.1, PI.2, ... | plane in which the three rotating axes of a pair of the pressing rollers 43.1, 43.2, ... are situated |
| PR | pressing direction of the pressing piston 5, serves as the middle axis of the polygonal casing segment 3.2 |

## Claims

1. Compacting arrangement comprising
- a pressing chamber (32) surrounded by a pressing chamber casing (3),
- an inlet (4) for guiding loose material (LM) into the pressing chamber (32),
- a compacting means (5), and
- an outlet (34),
wherein the pressing chamber casing (3) comprises a polygonal casing segment (3, 3.2) extending along a middle axis (PR),
wherein the or every cross-sectional face of the polygonal casing segment (3, 3.2) in a plane perpendicular to the middle axis (PR) has the shape of a polygon with n corners (27.1, 27.2, ...) and n edges between these n corners wherein n is equal to or greater than 5,
wherein the compacting means (5) is arranged to compress in the pressing chamber (32) loose material (LM), and
wherein the compacting arrangement is arranged to eject compressed loose material (LM) through the outlet (34) out of the pressing chamber (32),
**characterized in that**
the compacting arrangement further comprises a form fixing means (9, 10, 30.1, 30.2) arranged to provide in the pressing chamber (32) a form fixing unit (31),
wherein the compacting arrangement is arranged to place in the interior of the pressing chamber (32) the form fixing unit (31) around the compressed loose material (LM), thereby creating in the or in one polygonal casing segment (3, 3.2) a bale (B) which
- is wrapped into the form fixing unit (31) and
- comprises a circumferential surface with n edges (23.1, 23.2, ...), and
wherein the compacting arrangement is arranged to eject the created and wrapped polygonal bale (B) through the outlet (34) out of the pressing chamber (32).

2. Compacting arrangement according to claim 1,
**characterized in that**
the or at least one polygonal casing segment (3, 3.2) tapers towards the outlet (34) in a direction parallel to the middle axis (PR).

3. Compacting arrangement according to claim 2,
**characterized in that**
the form fixing means (9, 10, 30.1, 30.2, 31) is arranged to provide the form fixing unit (31) in the interior of the tapering polygonal casing segment (3, 3.2).

4. Compacting arrangement according to one of the preceding claims,
**characterized in that**
the outlet (34)
- forms one end of the or of one polygonal casing segment (3, 3.2) and
- has n corners and n edges between these corners.

5. Compacting arrangement according to one of the preceding claims,
**characterized in that**
the or every cross-sectional face of the polygonal casing segment (3, 3.2) has the shape of a polygon with n inner angles,
wherein every inner angle
- occurs between two adjacent edges of the polygon end
- is greater than 90 degrees.

6. Compacting arrangement according to one of the preceding claims,
**characterized in that**
the or at least one polygonal casing segment (3.2) comprises at least one pivotal wall part (7.2)
wherein the pivotal wall part (7.2) is pivotal around a wall part pivoting axis (37) which
- is perpendicular to the middle axis (PR) of the polygonal casing segment (3.2) and
- has a distance to this middle axis (PR) and
the compacting means (5) comprises a wall part positioning means (36)
arranged to pivot the pivotal wall part (7.2) around the wall part pivoting axis (37) towards the middle axis (PR) of the polygonal casing segment (3.2),
thereby decreasing the area of the cross-sectional face of the polygonal casing segment (3.2).

7. Compacting arrangement according to claim 6,
**characterized in that**
the pivotal wall part (7.2) comprises two wall elements which are rigidly connected with each other in a pivotal wall part edge (27.6),
wherein the pivotal wall part edge (27.6) forms one edge of the polygonal casing segment (3.2).

8. Compacting arrangement according to one of the preceding claims,
**characterized in that**
the pressing chamber casing (3) comprises a further casing segment (3.1),
wherein the inlet (4) guides into the further casing segment (3.1),
wherein the compacting means (5) is arranged to compress in the further casing segment (3.1) loose material (LM) and
wherein the compacting arrangement is arranged to shift compressed loose material (LM)
- out of the further casing segment (3.1) and
- into the polygonal casing segment (3.2).

9. Compacting arrangement according to claim 8,
**characterized in that**
the further casing segment (3.1) has a cross-sectional face different from the cross-sectional face of the polygonal casing segment (3.2),
wherein the compacting means (5) is arranged
- to operate in the interior of the further casing segment (3.1) and
- to remain outside of the interior of the polygonal casing segment (3.2).

10. Compacting arrangement according to claim 8 or claim 9,
**characterized in that**
the compacting means (5) comprises
- a piston (5) and
- a drive for the piston (5),
wherein the drive is arranged to oscillate the piston (5) in the interior of the further casing segment (3.1).

11. Compacting arrangement according to claim 8 or claim 9,
**characterized in that**
the further casing segment (3.1) is drum-shaped and
the compacting means (5)
- comprises a pressing member (40.1, 40.2, ...) which forms a circumferential surface of the drum-shaped further casing segment (3.1) and
- is arranged to rotate loose material (LM) in the further casing segment (3.1) around an axis parallel to the middle axis (PR) of the further casing segment (3.1).

12. Compacting arrangement according to one of the preceding claims,
**characterized in that**
the compacting means (5) comprises
- a piston (5) with a pressing surface (51) and
- a drive for the piston (5),
wherein the piston (5) is at least partially positioned in the interior of the polygonal casing segment (3.2),
wherein the pressing surface (51)
- has the shape of a polygon with n corners (22.1, 22.2, ...) and n edges between these n corners and
- faces towards the loose material (LM) in the polygonal casing segment (3, 3.2), and
wherein the drive is arranged to oscillate the piston (5).

13. Compacting arrangement according to claim 12,
**characterized in that**
the piston (5) is movable between
- an engaging end position and
- a remote end position,
wherein the pressing surface (51) in the engaging end position engages into the interior of the polygonal casing segment (3.2) and
wherein the pressing surface (51) in the remote end position has a distance to the polygonal casing segment (3.2).

14. Compacting arrangement according to one of the preceding claims,
**characterized in that**
the compacting means (5) comprises at least one auger,
wherein the auger is arranged
- to rotate around an axis parallel or angular to the middle axis (PR) of the polygonal casing segment (3, 3.2) and
- to engage into the polygonal casing segment (3, 3.2).

15. Compacting arrangement according to one of the preceding claims,
**characterized in that**
the compacting means (5) is arranged to shift the loose material (LM) into the provided form fixing unit (31).

16. Compacting arrangement according to one of the preceding claims,
**characterized in that**
the compacting arrangement comprises a low pressure creating means arranged to create a low pressure in the interior of that polygonal casing segment (3.2) in which the form fixing unit (31) is provided,
wherein the created low pressure is lower than the atmospheric pressure on ground.

17. Compacting arrangement according to one of the preceding claims,
**characterized in that**
the compacting arrangement is arranged
- to provide the form fixing unit (31) in the interior of the polygonal casing segment (3, 3.2) and
- to shift loose material (LM) into the provided form fixing unit (31) after the form fixing unit (31) is placed in the interior.

18. Compacting arrangement according to one of the preceding claims,
**characterized in that**
the pressing chamber casing (3) comprises a further casing segment (3.1),
wherein the compacting arrangement is arranged
- to provide the form fixing unit (31) in the interior of the further casing segment (3.1),
- to place in the further casing segment (3.1) the provided form fixing unit (31) around the compressed loose material (LM), and
- to move the loose material (LM) being in the form fixing unit (31) into the polygonal casing segment (3, 3.2).

19. Compacting arrangement according to one of the preceding claims,
**characterized in that**
the form fixing unit (31) is made of an impermeable material and
the compacting means (5) is arranged to seal in the pressing chamber (32) the form fixing unit (31).

20. Compacting arrangement according to one of the preceding claims,
**characterized in that**
the form fixing means (9, 10, 30.1, 30.2, 31) is arranged to provide in the pressing chamber (32)
- n parallel longitudinal elements and
- several rigid connecting elements connecting the n longitudinal elements,
wherein the n longitudinal elements and the rigid connecting elements belong to the form fixing unit (31) and
wherein the compacting arrangement is arranged to create in the polygonal casing segment (3, 3.2) the bale (B) such that the n edges of the bale (B) are adjacent to the n longitudinal elements.

21. Compacting arrangement according to one of the preceding claims,
**characterized in that**
the form fixing means (9, 10, 30.1, 30.2, 31) comprises
- a reservoir (16) for several strands (17) of twine,
- a guiding member (24), and
- a knotting arrangement (6),
wherein the guiding member (24) is arranged to guide several twine strands (17) taken from the reservoir (16) around the bale (B) in the pressing chamber (32) and
wherein the knotting arrangement (6) is arranged to knot together in the pressing chamber (32) at least two twine strands (17).

22. Compacting arrangement according to one of the preceding claims,
**characterized in that**
the compacting means (5) comprises several driven rotatable pressing members (43.1, 43.2, ...) forming the circumferential surface of the polygonal casing segment (3.2), wherein the respective rotating axis of a pressing member (43.1, 43.2, ...) is parallel to the middle axis (PR) and
wherein every pressing member (43.1, 43.2, ...) is arranged to convey loose material (LM) in a direction perpendicular to the middle axis (PR).

23. Compacting arrangement according to one of the preceding claims,
**characterized in that**
the compacting arrangement is connected with a wrapping apparatus,
wherein the wrapping apparatus is arranged to place a further wrap around the polygonal bale (B) being already wrapped in the form fixing unit (31).

24. Vehicle comprising a compacting arrangement according to one of the proceedings claims.

25. Compacting method for compacting loose material (LM) by using a compacting arrangement comprising
- a pressing chamber (32) surrounded by a pressing chamber casing (3),
- an inlet (4),
- a compacting means (5), and
- an outlet (34),
wherein the pressing chamber casing (3) comprises a polygonal casing segment (3, 3.2) extending along a middle axis (PR),
wherein the compacting method comprises the steps that
- loose material (LM) is guided through the inlet (4) into the pressing chamber (32),
- the compacting means (5) compresses in the pressing chamber (32) loose material (LM) and
- compressed loose material (LM) is ejected through the outlet (34) out of the pressing chamber (32),
**characterized in that**
the compacting arrangement further comprises a form fixing means (9, 10, 30.1, 30.2), wherein the compacting method comprises the further steps that the form fixing means (9, 10, 30.1, 30.2) provides in the pressing chamber (32) a form fixing unit (31),
the provided form fixing unit (31) is placed around the compressed loose material (LM) in the interior of the pressing chamber (32),
a bale (B) is created in the polygonal casing segment (3, 3.2),
wherein the created bale (B)
- is wrapped into the form fixing unit (31) and
- comprises a circumferential surface with n edges, and
the created and wrapped polygonal bale (B) is ejected through the outlet (34) out of the pressing chamber (32).

26. Compacting method according to claim 25,
**characterized in that**
the pressing chamber casing (3) comprises a further casing segment (3.1),
wherein the step that loose material (LM) is guided into the pressing chamber (32) comprises the step that
the loose material (LM) is guided
- through the inlet (4) into the further casing segment (3.1) and
- from the further casing segment (3.1) into the or into one polygonal casing segment (3.2) and
wherein the step that the compacting means (5) compresses loose material (LM) comprises the step that the compacting means (5)
- compresses in the further casing segment (3.1) loose material (LM) and
- operates outside of the or of every polygonal casing segment (3.2).

27. Compacting method according to claim 25 or claim 26,
**characterized in that**
the pressing chamber casing (3) comprises a further casing segment (3.1),
wherein the step that the form fixing unit (31) is provided comprises the step that the form fixing unit (31) is provided in the interior of the further casing segment (3.1) and wherein the step that the provided form fixing unit (31) is placed around the loose material (LM) comprises the steps that
- the form fixing unit (31) is placed in the further casing segment (3.1) around the compressed loose material (LM) and
- the loose material (LM) being in the form fixing unit (31) is moved from the further casing segment (3.1) into the polygonal casing segment (3.2).

28. Compacting method according to one of the claims 25 to 27,
**characterized in that**
the step that the form fixing unit (31) is provided is performed in a part of the pressing chamber (32) which is empty when providing the form fixing unit (31) and
the step that the provided form fixing unit (31) is placed around the compressed loose material (LM) comprises the step that
the compacting means (5) shifts loose material (LM) into the provided form fixing unit (31).

29. Compacting method according to one of the claims 25 to 28, **characterized in that**
after ejecting the polygonal bale (B) being wrapped in the form fixing unit (31) the steps are performed that
- the bale (B) is transferred to a wrapping apparatus and
- the wrapping apparatus wraps the polygonal bale (B) into a further wrap.

30. Compacting method according to one of the claims 25 to 29,
**characterized in that**
the compacting arrangement belongs to a vehicle.

31. Compacting method according to claim 30,
**characterized in that**
the vehicle
- is moved over ground before starting the compacting method and
- remains on one place while the compacting means (5) compresses loose material (LM) and while the bale (B) is created.

## Patentansprüche

1. Verdichtungsanordnung, mit
- einer von einem Presskammergehäuse (3) umgebenen Presskammer (32),
- einem Einlass (4) zum Führen von losem Material (LM) in die Presskammer (32),
- einem Verdichtungsmittel (5), und
- einem Auslass (34),
wobei das Presskammergehäuse (3) ein polygonales Gehäusesegment (3, 3.2) aufweist, das sich entlang einer Mittelachse (PR) erstreckt,
wobei die oder jede Querschnittsfläche des polygonalen Gehäusesegments (3, 3.2) in einer Ebene senkrecht zu der Mittelachse (PR) die Form eines Polygons mit n Ecken (27.1, 27.2, ...) und n Kanten zwischen diesen n Ecken besitzt, wobei n gleich oder größer als 5 ist,
wobei das Verdichtungsmittel (5) dazu angeordnet ist, in der Presskammer (32) loses Material (LM) zu verdichten, und
wobei die Verdichtungsanordnung dazu angeordnet ist, verdichtetes loses Material (LM) durch den Auslass (34) aus der Presskammer (32) auszuwerfen,
**dadurch gekennzeichnet, dass**
die Verdichtungsanordnung weiterhin ein Formfixiermittel (9, 10, 30.1, 30.2) aufweist, das dazu angeordnet ist, in der Presskammer (32) eine Formfixiereinheit (31) bereitzustellen,
wobei die Verdichtungsanordnung dazu angeordnet ist, die Formfixiereinheit (31) im Inneren der Presskammer (32) um das verdichtete lose Material (LM) herum anzuordnen,
und so in dem oder in einem polygonalen Gehäusesegment (3, 3.2) einen Ballen (B) herzustellen, der
- in die Formfixiereinheit (31) gewickelt ist und
- eine Umfangsfläche mit n Kanten (23.1, 23.2, ...) aufweist, und
wobei die Verdichtungsanordnung dazu angeordnet ist, den hergestellten und eingewickelten polygonalen Ballen (B) durch den Auslass (34) aus der Presskammer (32) auszuwerfen.

2. Verdichtungsanordnung nach Anspruch 1,
**dadurch gekennzeichnet, dass**
sich das oder mindestens ein polygonales Gehäusesegment (3, 3.2) in Richtung auf den Auslass (34) in eine Richtung parallel zu der Mittelachse (PR) verjüngt.

3. Verdichtungsanordnung nach Anspruch 2,
**dadurch gekennzeichnet, dass**
das Formfixiermittel (9, 10, 30.1, 30.2, 31) dazu angeordnet ist, die Formfixiereinheit (31) im Inneren des sich verjüngenden polygonalen Gehäusesegments (3, 3.2) bereitzustellen.

4. Verdichtungsanordnung nach einem der vorhergehenden Ansprüche,
**dadurch gekennzeichnet, dass**
der Auslass (34)
- ein Ende des oder eines polygonalen Gehäusesegments (3, 3.2) bildet und
- n Ecken und n Kanten zwischen diesen Ecken besitzt.

5. Verdichtungsanordnung nach einem der vorhergehenden Ansprüche,
**dadurch gekennzeichnet, dass**
die oder jede Querschnittsfläche des polygonalen Gehäusesegments (3, 3.2) die Form eines Polygons mit n inneren Winkeln besitzt,
wobei jeder innere Winkel
- zwischen zwei aneinander angrenzenden Kanten des Polygons vorliegt und
- größer ist als 90 Grad.

6. Verdichtungsanordnung nach einem der vorhergehenden Ansprüche,
**dadurch gekennzeichnet, dass**
das oder mindestens ein polygonales Gehäusesegment (3.2) mindestens einen schwenkbaren Wandteil (7.2) aufweist,
wobei der schwenkbare Wandteil (7.2) um eine Wandteilschwenkachse (37) schwenkbar ist, die
- senkrecht zu der Mittelachse (PR) des polygonalen Gehäusesegments (3.2) ist und
- einen Abstand zu dieser Mittelachse (PR) besitzt, und
das Verdichtungsmittel (5) ein Wandteilpositionierungsmittel (36) aufweist, das dazu angeordnet ist, den schwenkbaren Wandteil (7.2) um die Wandteilschwenkachse (37) in Richtung auf die Mittelachse (PR) des polygonalen Gehäusesegments (3.2) zu verschwenken,
wobei es die Fläche der Querschnittsfläche des polygonalen Gehäuseteils (3.2) verkleinert.

7. Verdichtungsanordnung nach Anspruch 6,
**dadurch gekennzeichnet, dass**
der schwenkbare Wandteil (7.2) mindestens zwei Wandelemente aufweist, die an einer Kante (27.6) des schwenkbaren Wandteils fest miteinander verbunden sind,
wobei die Kante (27.6) des schwenkbaren Wandteils eine Kante des polygonalen Gehäusesegments (3.2) bildet.

8. Verdichtungsanordnung nach einem der vorhergehenden Ansprüche,
**dadurch gekennzeichnet, dass**
das Presskammergehäuse (3) ein weiteres Gehäusesegment (3.1) aufweist,
wobei der Einlass (4) in das weitere Gehäusesegment (3.1) führt,
wobei das Verdichtungsmittel (5) angeordnet ist, um in dem weiteren Gehäusesegment (3.1) loses Material (LM) zu verdichten, und
wobei die Verdichtungsanordnung dazu angeordnet ist, verdichtetes loses Material (LM)
- aus dem weiteren Gehäusesegment (3.1) und
- in das polygonale Gehäusesegment (3.2)
zu verlagern.

9. Verdichtungsanordnung nach Anspruch 8,
**dadurch gekennzeichnet, dass**
das weitere Gehäusesegment (3.1) eine Querschnittsfläche besitzt, die verschieden ist von der Querschnittsfläche des polygonalen Gehäusesegments (3.2),
wobei das Verdichtungsmittel (5) dazu angeordnet ist,
- im Inneren des weiteren Gehäusesegments (3.1) zu arbeiten und
- außerhalb des Inneren des polygonalen Gehäusesegments (3.2) zu verbleiben.

10. Verdichtungsanordnung nach Anspruch 8 oder Anspruch 9,
**dadurch gekennzeichnet, dass**
das Verdichtungsmittel (5) Folgendes aufweist:
- einen Kolben (5) und
- einen Antrieb für den Kolben (5),
wobei der Antrieb dazu angeordnet ist, den Kolben (5) im Inneren des weiteren Gehäusesegments (3.1) zu oszillieren.

11. Verdichtungsanordnung nach Anspruch 8 oder Anspruch 9,
**dadurch gekennzeichnet, dass**
das weitere Gehäusesegment (3.1) trommelförmig ist und
das Verdichtungsmittel (5)
- ein Verdichtungsteil (40.1, 40.2, ...) aufweist, das eine Umfangsfläche des trommelförmigen weiteren Gehäusesegments (3.1) bildet, und
- dazu angeordnet ist, loses Material (LM) in dem weiteren Gehäusesegment (3.1) um eine Achse parallel zu der Mittelachse (PR) des weiteren Gehäusesegments (3.1) zu rotieren.

12. Verdichtungsanordnung nach einem der vorhergehenden Ansprüche,
**dadurch gekennzeichnet, dass**
das Verdichtungsmittel (5) Folgendes aufweist:
- einen Kolben (5) mit einer Pressfläche (51) und
- einen Antrieb für den Kolben (5),
wobei der Kolben (5) mindestens teilweise im Inneren des polygonalen Gehäusesegments (3.2) angeordnet ist,
wobei die Pressfläche (51)
- die Form eines Polygons mit n Ecken (22.1, 22.2, ...) und n Kanten zwischen diesen n Ecken besitzt und
- dem losen Material (LM) in dem polygonalen Gehäusesegment (3, 3.2) zugewandt ist und
wobei der Antrieb dazu angeordnet ist, den Kolben (5) zu oszillieren.

13. Verdichtungsanordnung nach Anspruch 12,
**dadurch gekennzeichnet, dass**
der Kolben (5) beweglich ist zwischen
- einer Eingriffs-Endposition und
- einer entfernten Endposition,
wobei die Pressfläche (51) in der Eingriffs-Endposition in das Innere des polygonalen Gehäusesegments (3.2) eingreift und
wobei die Pressfläche (51) in der entfernten Endposition einen Abstand zu dem polygonalen Gehäusesegment (3.2) besitzt.

14. Verdichtungsanordnung nach einem der vorhergehenden Ansprüche,
**dadurch gekennzeichnet, dass**
das Verdichtungsmittel (5) mindestens eine Förderschnecke aufweist,
wobei die Förderschnecke dazu angeordnet ist,
- um eine Achse parallel oder winklig zu der Mittelachse (PR) des polygonalen Gehäusesegments (3, 3.2) zu rotieren und
- in das polygonale Gehäusesegment (3, 3.2) einzugreifen.

15. Verdichtungsanordnung nach einem der vorhergehenden Ansprüche,
**dadurch gekennzeichnet, dass**
das Verdichtungsmittel (5) dazu angeordnet ist, das lose Material (LM) in die bereitgestellte Formfixiereinheit (31) zu verlagern.

16. Verdichtungsanordnung nach einem der vorhergehenden Ansprüche,
**dadurch gekennzeichnet, dass**
die Verdichtungsanordnung ein Niedrigdruckherstellmittel aufweist,
das dazu angeordnet ist, einen niedrigen Druck in dem Inneren desjenigen polygonalen Gehäusesegments (3.2), in dem die Formfixiereinheit (31) bereitgestellt ist, herzustellen,
wobei der hergestellte niedrige Druck niedriger ist als der Atmosphärendruck am Boden.

17. Verdichtungsanordnung nach einem der vorhergehenden Ansprüche,
**dadurch gekennzeichnet, dass**
die Verdichtungsanordnung dazu angeordnet ist,
- die Formfixiereinheit (31) im Inneren des polygonalen Gehäusesegments (3, 3.2) bereitzustellen und
- loses Material (LM) in die bereitgestellte Formfixiereinheit (31) zu verlagern, nachdem die Formfixiereinheit (31) in dem Inneren angeordnet ist.

18. Verdichtungsanordnung nach einem der vorhergehenden Ansprüche,
**dadurch gekennzeichnet, dass**
das Presskammergehäuse (3) ein weiteres Gehäusesegment (3.1) aufweist,
wobei die Verdichtungsanordnung dazu angeordnet ist,
- die Formfixiereinheit (31) im Inneren des weiteren Gehäusesegments (3.1) bereitzustellen,
- in dem weiteren Gehäusesegment (3.1) die bereitgestellte Formfixiereinheit (31) um das verdichtete lose Material (LM) herum anzuordnen und
- das sich in der Formfixiereinheit (31) befindende lose Material (LM) in das polygonale Gehäusesegment (3, 3.2) zu bewegen.

19. Verdichtungsanordnung nach einem der vorhergehenden Ansprüche,
**dadurch gekennzeichnet, dass**
die Formfixiereinheit (31) aus einen undurchlässigen Material hergestellt ist und
das Verdichtungsmittel (5) dazu angeordnet ist, in der Presskammer (32) die Formfixiereinheit (31) zu versiegeln.

20. Verdichtungsanordnung nach einem der vorhergehenden Ansprüche,
**dadurch gekennzeichnet, dass**
das Formfixiermittel (9, 10, 30.1, 30.2, 31) dazu angeordnet ist, in der Presskammer (32)
- n parallele Längselemente bereitzustellen und
- mehrere steife Verbindungselemente bereitzustellen, die die n Längselemente verbinden,
wobei die n Längselemente und die steifen Verbindungselemente zu der Formfixiereinheit (31) gehören und
wobei die Verdichtungsanordnung dazu angeordnet ist, in dem polygonalen Gehäusesegment (3, 3.2) den Ballen (B) herzustellen, so dass die n Kanten des Ballens (B) benachbart zu den n Längselementen angeordnet sind.

21. Verdichtungsanordnung nach einem der vorhergehenden Ansprüche,
**dadurch gekennzeichnet, dass**
das Formfixiermittel (9, 10, 30.1, 30.2, 31) Folgendes aufweist:
- einen Vorratsbehälter (16) für mehrere Schnurstränge (17),
- ein Führungsteil (24), und
- eine Knotanordnung (6),
wobei das Führungsteil (24) dazu angeordnet ist, mehrere aus dem Vorratsbehälter (16) entnommene Schnurstränge (17) um den Ballen (B) in der Presskammer (32) herum zu führen und
wobei die Knotanordnung (6) dazu angeordnet ist, in der Presskammer (32) mindestens zwei Schnurstränge (17) miteinander zu verknoten.

22. Verdichtungsanordnung nach einem der vorhergehenden Ansprüche,
**dadurch gekennzeichnet, dass**
das Verdichtungsmittel (5) mehrere angetriebene drehbare Pressteile (43.1, 43.2, ...) aufweist, die die Umfangsfläche des polygonalen Gehäusesegments (3.2) bilden,
wobei die jeweilige Rotationsachse eines Pressteils (43.1, 43.2, ...) parallel zu der Mittelachse (PR) ist und
wobei jedes Pressteil (43.1, 43.2, ...) dazu angeordnet ist, loses Material (LM) in eine Richtung senkrecht zu der Mittelachse (PR) zu fördern.

23. Verdichtungsanordnung nach einem der vorhergehenden Ansprüche,
**dadurch gekennzeichnet, dass**
die Verdichtungsanordnung verbunden ist mit einer Einwickelvorrichtung,
wobei die Einwickelvorrichtung dazu angeordnet ist, einen weiteren Wickel um den polygonalen Ballen (B) anzuordnen, der bereits in die Formfixiereinheit (31) gewickelt ist.

24. Fahrzeug mit einer Verdichtungsanordnung nach einem der vorhergehenden Ansprüche.

25. Verdichtungsverfahren zum Verdichten von losem Material (LM)
durch Verwendung einer Verdichtungsanordnung mit
- einer von einem Presskammergehäuse (3) umgebenen Presskammer (32),
- einem Einlass (4),
- einem Verdichtungsmittel (5) und
- einem Auslass (34),
wobei das Presskammergehäuse (3) ein polygonales Gehäusesegment (3, 3.2) aufweist, das sich entlang einer Mittelachse (PR) erstreckt,
wobei das Verdichtungsverfahren die Schritte aufweist, dass
- loses Material (LM) durch den Einlass (4) in die Presskammer (32) geführt wird,
- das Verdichtungsmittel (5) in der Presskammer (32) loses Material (LM) verdichtet und
- verdichtetes loses Material (LM) durch den Auslass (34) aus der Presskammer (32) ausgestoßen wird,
**dadurch gekennzeichnet, dass**
die Verdichtungsanordnung weiterhin ein Formfixiermittel (9, 10, 30.1, 30.2) aufweist,
wobei das Verdichtungsverfahren die weiteren Schritte aufweist, dass
das Formfixiermittel (9, 10, 30.1, 30.2) in der Presskammer (32) eine Formfixiereinheit (31) bereitstellt,
die bereitgestellte Formfixiereinheit (31) im Inneren der Presskammer (32) um das komprimierte lose Material (LM) angeordnet wird,
ein Ballen (B) in dem polygonalen Gehäusesegment (3, 3.2) hergestellt wird,
wobei der herstellte Ballen (B)
- in die Formfixiereinheit (31) gewickelt ist und
- eine Umfangsfläche mit n Kanten aufweist und
der hergestellte und eingewickelte polygonale Ballen (B) durch den Auslass (34) aus der Presskammer (32) ausgestoßen wird.

26. Verdichtungsverfahren nach Anspruch 25,
**dadurch gekennzeichnet, dass**
das Presskammergehäuse (3) ein weiteres Gehäusesegment (3.1) aufweist,
wobei der Schritt, dass loses Material (LM) in die Presskammer (32) geführt wird, den Schritt aufweist, dass
das lose Material (LM)
- durch den Einlass (4) in das weitere Gehäusesegment (3.1) geführt wird und
- von dem weiteren Gehäusesegment (3.1) in das oder ein polygonales Gehäusesegment (3.2) geführt wird, und
wobei der Schritt, dass das Verdichtungsmittel (5) loses Material (LM) verdichtet, den Schritt aufweist, dass das Verdichtungsmittel (5)
- in dem weiteren Gehäusesegment (3.1) loses Material (LM) verdichtet und
- außerhalb des oder jedes polygonalen Gehäusesegments (3.2) arbeitet.

27. Verdichtungsverfahren nach Anspruch 25 oder Anspruch 26,
**dadurch gekennzeichnet, dass**
das Presskammergehäuse (3) ein weiteres Gehäusesegment (3.1) aufweist,
wobei der Schritt, dass die Formfixiereinheit (31) bereitgestellt wird, den Schritt aufweist, dass die Formfixiereinheit (31) im Inneren des weiteren Gehäusesegments (3.1) bereitgestellt wird und wobei der Schritt, dass die bereitgestellte Formfixiereinheit (31) um das lose Material (LM) herum angeordnet wird, die Schritte aufweist, dass
- die Formfixiereinheit (31) in dem weiteren Gehäusesegment (3.1) um das verdichtete lose Material (LM) angeordnet wird und
- das lose Material (LM), das sich in der Formfixiereinheit (31) befindet, von dem weiteren Gehäusesegment (3.1) in das polygonale Gehäusesegment (3.2) bewegt wird.

28. Verdichtungsverfahren nach einem der Ansprüche 25 bis 27,
**dadurch gekennzeichnet, dass**
der Schritt, dass die Formfixiereinheit (31) bereitgestellt wird, in einem Teil der Presskammer (32) ausgeführt wird, der leer ist, wenn die Formfixiereinheit (31) bereitgestellt wird, und
der Schritt, dass die bereitgestellte Formfixiereinheit (31) um das komprimierte lose Material angeordnet wird, den Schritt aufweist, dass
das Verdichtungsmittel (5) loses Material (LM) in die bereitgestellte Formfixiereinheit (31) verlagert.

29. Verdichtungsverfahren nach einem der Ansprüche 25 bis 28,
**dadurch gekennzeichnet, dass**
nach dem Ausstoßen des polygonalen Ballens (B), der in die Formfixiereinheit (31) eingewickelt ist, die Schritte ausgeführt werden, dass
- der Ballen (B) zu einer Einwickelvorrichtung übergeben wird und
- die Einwickelvorrichtung den polygonalen Ballen (B) in einen weiteren Wickel einwickelt.

30. Verdichtungsverfahren nach einem der Ansprüche 25 bis 29,
**dadurch gekennzeichnet, dass**
die Verdichtungsanordnung zu einem Fahrzeug gehört.

31. Verdichtungsverfahren nach Anspruch 30,
**dadurch gekennzeichnet, dass**
das Fahrzeug
- vor einem Beginn des Verdichtungsverfahrens über den Boden bewegt wird und
- an einem Ort verbleibt, während das Verdichtungsmittel (5) loses Material (LM) verdichtet und während der Ballen (B) hergestellt wird.

## Revendications

1. Agencement de compactage comprenant :
un compartiment de pression (32) entouré par un carter de compartiment de pression (3),
un orifice d'entrée (4) destiné à guider de la matière libre (LM) dans le compartiment de pression (32),
un moyen de compactage (5), et
un orifice de sortie (34),
dans lequel le carter de compartiment de pression (3) comprend un segment de carter polygonal (3, 3.2) s'étendant le long d'un axe central (PR),
dans lequel la ou chaque face de section transversale du segment de carter polygonal (3, 3.2) dans un plan perpendiculaire à l'axe central (PR) présente la forme d'un polygone avec n angles (27.1, 27.2, ...) et n arêtes entre ces n angles dans lequel n est supérieur ou égal à 5,
dans lequel le moyen de compactage (5) est agencé de manière à presser dans le compartiment de pression (32) la matière libre (LM), et
dans lequel l'agencement de compactage est agencé de manière à éjecter la matière libre pressée (LM) à travers l'orifice de sortie (34) hors du compartiment de pression (32),
**caractérisé en ce que**
l'agencement de compactage comprend, en outre, des moyens de mise en forme (9, 10, 30.1, 30.2) agencés de manière à former dans le compartiment de pression (32) une unité de mise en forme (31),
dans lequel l'agencement de compactage est agencé afin de placer à l'intérieur du compartiment de pression (32) l'unité de mise en forme (31) autour de la matière libre (LM) pressée, créant ainsi, dans le ou dans un segment de carter polygonal (3, 3.2), une balle (B) qui
est enveloppée dans l'unité de mise en forme (31) et
comprend une surface circonférentielle avec n arêtes (23.1, 23.2, ...), et
dans lequel l'agencement de compactage est agencé afin d'éjecter la balle polygonale créée et enveloppée (B) par l'orifice de sortie (34) hors du compartiment de pression (32).

2. Agencement de compactage selon la revendication 1,
**caractérisé en ce que**
le ou au moins un segment de carter polygonal (3, 3.2) est évasé vers l'orifice de sortie (34) dans une direction parallèle à l'axe central (PR).

3. Agencement de compactage selon la revendication 2,
**caractérisé en ce que**
le moyen de mise en forme (9, 10, 30.1, 30.2, 31) est agencé de manière à former l'unité de mise en forme (31) à l'intérieur du segment de carter polygonal (3, 3.2) évasé.

4. Agencement de compactage selon l'une des revendications précédentes,
**caractérisé en ce que**
l'orifice de sortie (34)
forme une extrémité du ou d'un segment de carter polygonal (3, 3.2) et
comporte n angles et n arêtes entre ces angles.

5. Agencement de compactage selon l'une des revendications précédentes,
**caractérisé en ce que**
la ou chaque face de section transversale du segment de carter polygonal (3, 3.2) présente la forme d'un polygone avec n angles internes,
dans lequel chaque angle interne :
est situé entre deux arêtes adjacentes de l'extrémité de polygone,
est supérieur à 90°.

6. Agencement de compactage selon l'une des revendications précédentes,
**caractérisé en ce que**
le ou au moins un segment de carter polygonal (3.2) comprend au moins une partie de paroi pivotante (7.2),
dans lequel la partie de paroi pivotante (7.2) peut pivoter autour d'un axe de pivotement de partie de paroi (37) qui
est perpendiculaire à l'axe central (PR) du segment de carter polygonal (3.2) et
présente une distance par rapport à cet axe central (PR) et
le moyen de compactage (5) comprend un moyen de positionnement de partie de paroi (36) agencé afin de faire pivoter la partie de paroi pivotante (7.2) autour de l'axe de pivotement de partie de paroi (37) vers l'axe central (PR) du segment de carter polygonal (3.2),
diminuant ainsi la surface de la face de section transversale du segment de carter polygonal (3.2).

7. Agencement de compactage selon la revendication 6,
**caractérisé en ce que**
la partie de paroi pivotante (7.2) comprend deux éléments de paroi qui sont raccordés de manière rigide l'un à l'autre sur une arête de partie de paroi pivotante (27.6),
dans lequel l'arête de partie de paroi pivotante (27.6) forme une arête du segment de carter polygonal (3.2).

8. Agencement de compactage selon l'une des revendications précédentes,
**caractérisé en ce que**
le carter de compartiment de pression (3) comprend un segment de carter supplémentaire (3.1),
dans lequel l'orifice d'entrée (4) assure le guidage dans le segment de carter supplémentaire (3.1),
dans lequel le moyen de compactage (5) est agencé afin de presser dans le segment de carter supplémentaire (3.1) de la matière libre (LM) et
dans lequel l'agencement de compactage est agencé afin de déplacer la matière libre pressée (LM)
hors du segment de carter supplémentaire (3.1) et
dans le segment de carter polygonal (3.2).

9. Agencement de compactage selon la revendication 8,
**caractérisé en ce que**
le segment de carter supplémentaire (3.1) présente une face de section transversale différente de la face de section transversale du segment de carter polygonal (3.2), dans lequel le moyen de compactage (5) est agencé
de manière à fonctionner à l'intérieur du segment de carter supplémentaire (3.1) et
à rester à l'extérieur de la partie interne du segment de carter polygonal (3.2).

10. Agencement de compactage selon la revendication 8 ou 9,
**caractérisé en ce que**
le moyen de compactage (5) comprend
un piston (5) et
un dispositif d'entraînement pour le piston (5),
dans lequel le dispositif d'entraînement est agencé afin de faire osciller le piston (5) à l'intérieur du segment de carter supplémentaire (3.1).

11. Agencement de compactage selon la revendication 8 ou 9,
**caractérisé en ce que**
le segment de carter supplémentaire (3.1) est en forme de tambour et
le moyen de compactage (5)
comprend un élément de pressage (40.1, 40.2, ...) qui forme une surface circonférentielle du segment de carter supplémentaire en forme de tambour (3.1) et
est agencé de manière à faire tourner la matière libre (LM) dans le segment de carter supplémentaire (3.1) autour d'un axe parallèle à l'axe central (PR) du segment de carter supplémentaire (3.1).

12. Agencement de compactage selon l'une des revendications précédentes,
**caractérisé en ce que**
le moyen de compactage (5) comprend
un piston (5) avec une surface de pressage (51) et
un dispositif d'entraînement pour le piston (5),
dans lequel le piston (5) est, au moins partiellement, positionné à l'intérieur du segment de carter polygonal (3.2),
dans lequel la surface de pressage (51)
présente la forme d'un polygone avec n angles (22.1, 22.2, ...) et n arêtes entre ces n angles et
est orientée vers la matière libre (LM) dans le segment de carter polygonal (3, 3.2), et
dans lequel le dispositif d'entraînement est agencé afin de faire osciller le piston (5).

13. Agencement de compactage selon la revendication 12,
**caractérisé en ce que**
le piston (5) peut être déplacé entre
une position d'extrémité de couplage et
une position d'extrémité distante,
dans lequel la surface de pressage (51) dans la position d'extrémité de couplage assure le couplage dans la partie intérieure du segment de carter polygonal (3.2) et
dans lequel la surface de pressage (51) dans la position d'extrémité distante présente une distance par rapport au segment de carter polygonal (3.2).

14. Agencement de compactage selon l'une des revendications précédentes,
**caractérisé en ce que**
le moyen de compactage (5) comprend au moins une vis sans fin,
dans lequel la vis sans fin est agencée de manière
à tourner autour d'un axe parallèle ou formant un angle par rapport à l'axe central (PR) du segment de carter polygonal (3, 3.2) et
à s'assembler dans le segment de carter polygonal (3, 3.2).

15. Agencement de compactage selon l'une des revendications précédentes,
**caractérisé en ce que**
le moyen de compactage (5) est agencé de manière à déplacer la matière libre (LM) dans l'unité de mise en forme (31).

16. Agencement de compactage selon l'une des revendications précédentes,
**caractérisé en ce que**
l'agencement de compactage comprend un moyen de création de basse pression
agencé de manière à créer une basse pression à l'intérieur du segment de carter polygonal (3.2) dans lequel l'unité de mise en forme (31) est formée,
dans lequel la basse pression créée est inférieure à la pression atmosphérique au sol.

17. Agencement de compactage selon l'une des revendications précédentes,
**caractérisé en ce que**
l'agencement de compactage est agencé de manière
à former l'unité de mise en forme (31) à l'intérieur du segment de carter polygonal (3, 3.2) et
à déplacer la matière libre (LM) dans l'unité de mise en forme (31) formée après que l'unité de mise en forme (31) a été placée à l'intérieur.

18. Agencement de compactage selon l'une des revendications précédentes,
**caractérisé en ce que**
le carter de compartiment de pression (3) comprend un segment de carter supplémentaire (3.1), dans lequel l'agencement de compactage est agencé de manière
à former l'unité de mise en forme (31) à l'intérieur du segment de carter supplémentaire (3.1),
à placer dans le segment de carter supplémentaire (3.1) l'unité de mise en forme (31) formée autour de la matière libre pressée (LM), et
à déplacer la matière libre (LM) qui est dans l'unité de mise en forme (31) à l'intérieur du segment de carter polygonal (3, 3.2).

19. Agencement de compactage selon l'une des revendications précédentes,
**caractérisé en ce que**
l'unité de mise en forme (31) est réalisée en un matériau imperméable et
le moyen de compactage (5) est agencé de manière à sceller dans le compartiment de pression (32) l'unité de mise en forme (31).

20. Agencement de compactage selon l'une des revendications précédentes,
**caractérisé en ce que**
le moyen de mise en forme (9, 10, 30.1, 30.2, 31) est agencé de manière à former dans le compartiment de pression (32)
n éléments longitudinaux parallèles et
plusieurs éléments de liaison rigides reliant les n éléments longitudinaux,
dans lequel les n éléments longitudinaux et les éléments de liaison rigides appartiennent à l'unité de mise en forme (31) et
dans lequel l'agencement de compactage est agencé de manière à créer, dans le segment de carter polygonal (3, 3.2), la balle (B) de telle sorte que les n arêtes de la balle (B) sont adjacentes aux n éléments longitudinaux.

21. Agencement de compactage selon l'une des revendications précédentes,
**caractérisé en ce que**
le moyen de mise en forme (9.10, 30.1, 30.2, 31) comprend
un réservoir (16) pour plusieurs brins (17) de ficelle,
un élément de guidage (24), et
un agencement de formation de noeud (6),
dans lequel l'élément de guidage (24) est agencé de manière à guider plusieurs brins de ficelle (17) prélevés à partir du réservoir (16) autour de la balle (B) dans le compartiment de pression (32) et
dans lequel l'agencement de formation de noeud (6) est agencé de manière à nouer ensemble dans le compartiment de pression (32) au moins deux brins de ficelle (17).

22. Agencement de compactage selon l'une des revendications précédentes,
**caractérisé en ce que**
le moyen de compactage (5) comprend plusieurs éléments de pressage entraînés pouvant tourner (43.1, 43.2, ...) formant la surface circonférentielle du segment de carter polygonal (3.2),
dans lequel l'axe de rotation respectif d'un élément de pressage (43.1, 43.2, ...) est parallèle à l'axe central (PR) et
dans lequel chaque élément de pressage (43.1, 43.2, ...) est agencé de manière à transférer de la matière libre (LM) dans une direction perpendiculaire à l'axe central (PR).

23. Agencement de compactage selon l'une des revendications précédentes,
**caractérisé en ce que**
l'agencement de compactage est relié à un dispositif d'emballage,
dans lequel le dispositif d'emballage est agencé de manière à placer un emballage autour de la balle polygonale (B) qui a déjà été emballée dans l'unité de mise en forme (31).

24. Véhicule comprenant un agencement de compactage selon l'une des revendications précédentes.

25. Procédé de compactage destiné à compacter de la matière libre (LM) en utilisant un agencement de compactage comprenant
un compartiment de pression (32) entouré par un carter de compartiment de pression (3),
un orifice d'entrée (4),
un moyen de compactage (5), et
un orifice de sortie (34),
dans lequel le carter de compartiment de pression (3) comprend un segment de carter polygonal (3, 3.2) s'étendant le long d'un axe central (PR),
dans lequel le procédé de pressage comprend les étapes dans lesquelles
la matière libre (LM) est guidée à travers l'orifice d'entrée (4) dans le compartiment de pression (32),
le moyen de compactage (5) presse, dans la chambre de pressage (32), la matière libre (LM) et
la matière libre pressée (LM) est éjectée, à travers l'orifice de sortie (34), du compartiment de pression (32),
**caractérisé en ce que**
l'agencement de compactage comprend, en outre, un moyen de mise en forme (9, 10, 30.1, 30.2),
dans lequel le procédé de pressage comprend les étapes supplémentaires dans lesquelles
le moyen de mise en forme (9, 10, 30.1, 30.2) forme dans le compartiment de pression (32) une unité de mise en forme (31),
l'unité de mise en forme (31) formée est placée autour de la matière libre pressée (LM) à l'intérieur du compartiment de pression (32),
une balle (B) est créée sur le segment de carter polygonal (3, 3.2),
dans lequel la balle créée (B)
est emballée dans l'unité de mise en forme (31) et
comprend une surface circonférentielle avec n arêtes, et
la balle polygonale créée et emballée (B) est éjectée, à travers l'orifice de sortie (34), du compartiment de pression (32).

26. Procédé de compactage selon la revendication 25,
**caractérisé en ce que**
le carter de compartiment de pression (3) comprend un segment de carter supplémentaire (3.1),
dans lequel l'étape dans laquelle la matière libre (LM) est guidée dans le compartiment de pression (32) comprend l'étape dans laquelle
la matière libre (LM) est guidée :
à travers l'orifice d'entrée (4) dans le segment de carter supplémentaire (3.1) et
à partir du segment de carter supplémentaire (3.1) dans le ou dans un segment de carter polygonal (3.2) et
dans lequel, l'étape dans laquelle le moyen de compactage (5) presse la matière libre (LM) comprend l'étape dans laquelle le moyen de compactage (5)
presse dans le segment de carter supplémentaire (3.1) la matière libre (LM) et
agit à l'extérieur du ou de chaque segment de carter polygonal (3.2).

27. Procédé de compactage selon la revendication 25 ou 26,
**caractérisé en ce que**
le carter de compartiment de pression (3) comprend un segment de carter supplémentaire (3.1),
dans lequel, l'étape dans laquelle l'unité de mise en forme (31) est créée comprend l'étape dans laquelle l'unité de mise en forme (31) est créée à l'intérieur du segment de carter supplémentaire (3.1) et
dans lequel, l'étape dans laquelle l'unité de mise en forme (31) agencée est placée autour de la matière libre (LM) comprend les étapes dans lesquelles
l'unité de mise en forme (31) est placée dans le segment de carter supplémentaire (3.1) autour de la matière libre pressée (LM) et
la matière libre (LM) qui est dans l'unité de mise en forme (31) est déplacée à partir du segment de carter supplémentaire (3.1) dans le segment de carter polygonal (3.2).

28. Procédé de compactage selon l'une des revendications 25 à 27,
**caractérisé en ce que**
l'étape dans laquelle l'unité de mise en forme (31) est agencée est mise en oeuvre dans une partie du compartiment de pression (32) qui est vide lors de la préparation de l'unité de mise en forme (31) et
l'étape dans laquelle l'unité de mise en forme (31) agencée est placée autour de la matière libre pressée (LM) comprend l'étape dans laquelle
le moyen de compactage (5) déplace la matière libre (LM) dans l'unité de mise en forme (31) agencée.

29. Procédé de compactage selon l'une des revendications 25 à 28,
**caractérisé en ce que**
après éjection de la balle polygonale (B) emballée dans l'unité de mise en forme (31), les étapes sont suivantes sont mises en oeuvre
la balle (B) est transférée vers un dispositif d'emballage et
le dispositif d'emballage emballe la balle polygonale (B) dans un emballage supplémentaire.

30. Procédé de compactage selon l'une des revendications 25 à 29,
**caractérisé en ce que**
l'agencement de compactage appartient à un véhicule.

31. Procédé de compactage selon la revendication 30,
**caractérisé en ce que**
le véhicule est déplacé au sol avant le démarrage du procédé de pressage et
reste à un emplacement alors que le moyen de compactage (5) presse la matière libre (LM) et alors que la balle (B) est créée.
